(19) Europäisches Patentamt
European Patent Office
Office européen des brevets

(11) **EP 4 700 437 A1**

(12) **EUROPEAN PATENT APPLICATION**
published in accordance with Art. 153(4) EPC

(43) Date of publication:
**25.02.2026 Bulletin 2026/09**

(21) Application number: **24791874.1**

(22) Date of filing: **08.04.2024**

(51) International Patent Classification (IPC):
*G01S 17/34* (2020.01)     *G01S 17/42* (2006.01)
*G01S 17/58* (2006.01)     *G01S 7/48* (2006.01)

(52) Cooperative Patent Classification (CPC):
**G01S 7/48; G01S 17/34; G01S 17/42; G01S 17/58**

(86) International application number:
**PCT/CN2024/086572**

(87) International publication number:
**WO 2024/217289 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.04.2023  CN 202310460703**

(71) Applicant: **Shenzhen Yinwang Intelligent Technologies Co., Ltd.
Shenzhen, Guangdong 518110 (CN)**

(72) Inventors:
• **WU, Hongying**
  **Shenzhen, Guangdong 518129 (CN)**
• **LI, Menglin**
  **Shenzhen, Guangdong 518129 (CN)**
• **LIU, Tonghui**
  **Shenzhen, Guangdong 518129 (CN)**
• **SHI, Xianling**
  **Shenzhen, Guangdong 518129 (CN)**
• **ZHANG, Huahong**
  **Shenzhen, Guangdong 518129 (CN)**

(74) Representative: **Maiwald GmbH
Elisenhof
Elisenstraße 3
80335 München (DE)**

(54) **SIGNAL PROCESSING METHOD, APPARATUS AND SYSTEM**

(57)     Embodiments of this application provide a signal processing method and apparatus, and a system, and relate to the field of optoelectronic technologies. The method includes: determining a frequency sweep curve, where a specified frequency modulation periodicity of the frequency sweep curve includes an up chirp segment and a down chirp segment, and the up chirp segment and the down chirp segment each include a linear frequency sweep segment and a preset frequency sweep segment; generating, based on the frequency sweep curve, a local oscillator signal and a transmit signal that have a same waveform; performing a frequency mixing operation on the local oscillator signal and a corresponding echo signal to determine a beat frequency signal; intercepting a signal from the beat frequency signal in a specific time period; and determining a target parameter set based on the intercepted signal, where the target parameter set is used to resolve a range to a target object and a radial velocity of the target object. According to the method, the radial velocity of the target object and the range to the target object can be resolved while strong robustness of the signal processing method is ensured. In addition, it is ensured that a point rate of the system is not affected, and a hardware structure of the system is slightly changed.

FIG. 8

## Description

This application claims priority to Chinese Patent Application No. 202310460703.1, filed with the China National Intellectual Property Administration on April 21, 2023 and entitled "SIGNAL PROCESSING METHOD AND APPARATUS, AND SYSTEM", which is incorporated herein by reference in its entirety.

## TECHNICAL FIELD

This application relates to the field of optoelectronic technologies, and more specifically, to a signal processing method and apparatus, and a system.

## BACKGROUND

A frequency modulated continuous wave (frequency modulated continuous wave, FMCW) lidar (light detection and ranging, Lidar) is an optical remote sensing apparatus, and the apparatus can implement functions such as ranging, velocity measurement, target detection, tracking, and imaging recognition, and can be applied to application scenarios such as intelligent transportation, autonomous driving, atmospheric environment monitoring, geographic mapping, and uncrewed aerial vehicles. The FMCW lidar can specifically perform a signal frequency mixing operation on a transmit signal and an echo signal to obtain frequency information of a beat frequency signal, so as to resolve position information of a target object, that is, measure a range to the target object. In addition, the FMCW lidar further can resolve a radial velocity of the target object during ranging.

When a balanced photodetector (balanced photodetector, BPD) is used as a receive end in an FMCW lidar system, and the target object is at a short range and has a high radial velocity, a signal received by the BPD is presented in a form of real signal. As a result, signal processing performed by using an existing FMCW lidar system is prone to ambiguity in resolving parameters such as the range to the target object and the radial velocity of the target object, and robustness of the system is poor.

Therefore, how to avoid, on the premise of ensuring strong signal processing robustness of the FMCW lidar system, ambiguity in resolving the range to the target object and the radial velocity of the target object by the FMCW lidar system using the BPD as the receive end is an urgent problem to be resolved.

## SUMMARY

Embodiments of this application provide a signal processing method and apparatus, and a system. A transmit waveform control module is introduced to an FMCW lidar system, to control a waveform of a transmit signal, so as to avoid, on the premise of ensuring strong signal processing robustness of the FMCW lidar system, ambiguity in resolving a range to a target object and a radial velocity of the target object by the FMCW lidar system using a BPD as a receive end. In addition, it is ensured that a point rate of the system is not affected, and a hardware structure of the system is slightly changed.

According to a first aspect, a signal processing method is provided. The method includes: determining a first frequency sweep curve, where a first frequency modulation periodicity of the first frequency sweep curve includes an up chirp (chirp) segment and a down chirp segment, the up chirp segment includes a first linear frequency sweep segment and a first preset frequency sweep segment, the down chirp segment includes a second linear frequency sweep segment and a second preset frequency sweep segment, and the first preset frequency sweep segment is connected to the second preset frequency sweep segment; generating, based on the first frequency sweep curve, a first local oscillator signal and a first transmit signal that have a same waveform; performing a frequency mixing operation on the first local oscillator signal and a first echo signal, to determine a first beat frequency signal, where the first echo signal is a signal obtained by reflecting the first transmit signal off a target object; determining a first data segment, where the first data segment is a signal intercepted from the first beat frequency signal in a first time period, and the first time period has an intersection with a time period between an end point of the first linear frequency sweep segment of the first frequency sweep curve and a start point of a second linear frequency sweep segment of a second frequency sweep curve corresponding to the first echo signal; and determining a target parameter set based on the first data segment, where the target parameter set is used to resolve a range to the target object and a radial velocity of the target object.

For example, the first frequency sweep curve indicates a time-varying change trend of an instantaneous frequency of a signal.

For example, because the first local oscillator signal and the first transmit signal have a same signal waveform and a same correlation characteristic, the first frequency sweep curve may indicate a time-varying change trend of an instantaneous frequency of the first local oscillator signal or the first transmit signal.

For example, similar to the first frequency sweep curve, the second frequency sweep curve may indicate a time-varying change trend of an instantaneous frequency of the first echo signal.

For example, the first frequency modulation periodicity is a specified complete frequency modulation periodicity in at least one frequency modulation periodicity included in the first frequency sweep curve, for example, a $1^{st}$ complete frequency modulation periodicity in the first frequency sweep curve. It should be understood that the second frequency sweep curve corresponding to the first echo signal also correspondingly includes the first frequency modulation periodicity.

Based on the foregoing technical solution, during actual application, data at up-down chirp turn points of the local oscillator signal and the echo signal is not used for velocity and range estimation. Therefore, special waveform design is performed on a signal in the time period, and processing is performed based on the signal in the time period, to resolve the radial velocity of the target object and the range to the target object. This can not only ensure that a point rate of the system is not affected, but also can improve robustness and applicability of signal processing. In addition, a hardware structure of the system is slightly changed.

With reference to the first aspect, in some implementations of the first aspect, a waveform of the first preset frequency sweep segment and a waveform of the second preset frequency sweep segment each include a rectangular wave, a sine wave, or a sawtooth wave.

For example, the waveform of the first preset frequency sweep segment and the waveform of the second preset frequency sweep segment may alternatively be any other curves, and waveform duration and corresponding signal powers of the first preset frequency sweep segment and the second preset frequency sweep segment are controllable.

For example, the first preset frequency sweep segment or the second preset frequency sweep segment may specifically include a linear frequency sweep segment and/or a non-linear frequency sweep segment.

For example, the first frequency sweep curve may alternatively be a common triangular wave. In this case, it may be considered that the first preset frequency sweep segment and the second preset frequency sweep segment that are included in the first frequency sweep curve are linear, a slope of the first preset frequency sweep segment is the same as that of the first linear frequency sweep segment, and leakage of the second preset frequency sweep segment is the same as that of the second linear frequency sweep segment.

Based on the foregoing technical solution, the first preset frequency sweep segment and the second preset frequency sweep segment may be presented by using a plurality of waveforms, to improve signal processing flexibility.

With reference to the first aspect, in some implementations of the first aspect, before the target parameter set is determined based on the first data segment, a corresponding up chirp frequency $f_{bu}$ is determined based on an up chirp segment of the first beat frequency signal, a corresponding down chirp frequency $f_{bd}$ is determined based on a down chirp segment of the first beat frequency signal; and a first parameter set and a second parameter set are determined based on the up chirp frequency $f_{bu}$ and the down chirp frequency $f_{bd}$, where the first parameter set and the second parameter set belong to candidate parameter sets, and the target parameter set is a parameter set selected from the candidate parameter sets.

For example, a fourth beat frequency signal may be determined based on an up chirp segment of the first beat frequency signal, and a fifth beat frequency signal may be determined based on a down chirp segment of the first beat frequency signal. Specifically, the fourth beat frequency signal is obtained by performing a frequency mixing operation on the first local oscillator signal and an up chirp in the first echo signal. Similarly, the fifth beat frequency signal is obtained by performing a frequency mixing operation on the first local oscillator signal and a down chirp in the first echo signal. Then, a first time-to-frequency conversion is performed on the fourth beat frequency signal and the fifth beat frequency signal to obtain corresponding spectrums $S_U(f)$ and $S_D(f)$. Then, signal detection is separately performed on the spectrums $S_U(f)$ and $S_D(f)$, to determine the up chirp frequency $f_{bu}$ and the down chirp frequency $f_{bd}$ that correspond to the first beat frequency signal. Finally, a Doppler frequency $f_{d\_max}$ corresponding to a maximum velocity that can be measured by a lidar system is determined, $f_{bu}$ is compared with $f_{d\_max}$, and it is determined, based on a comparison result, whether ambiguity occurs in a system resolving result. The following provides a specific comparison manner.

If $f_{bu} > f_{d\_max}$, no ambiguity occurs in the system resolving result.

If $f_{bu} \leq f_{d\_max}$, ambiguity may occur in the system resolving result.

Based on the foregoing technical solution, whether velocity and range ambiguity exists in a currently obtained signal can be identified, and a data condition is provided for subsequently resolving the target range and the radial velocity.

With reference to the first aspect, in some implementations of the first aspect, a beat frequency $f_{b1}$ and a Doppler frequency $f_{d1}$ that are included in the first parameter set are separately determined by using the following formula (1):

$$f_{b1} = (f_{bu} + f_{bd})/2, f_{d1} = (f_{bd} - f_{bu})/2 \ (1);$$

and a beat frequency $f_{b2}$ and a Doppler frequency $f_{d2}$ that are included in the second parameter set are separately determined by using the following formula (2):

$$f_{b2} = (f_{bd} - f_{bu})/2, f_{d2} = (f_{bu} + f_{bd})/2 \ (2).$$

Based on the foregoing technical solution, the candidate parameter set can be determined, to provide a data condition for subsequently resolving the target range and the radial velocity.

With reference to the first aspect, in some implementations of the first aspect, a first time-to-frequency conversion is performed on the first data segment to determine a first spectrogram, where the first spectrogram indicates a relationship between an amplitude and a frequency of the first data segment; a spectral bandwidth of the first spectrogram is determined based on the first spectrogram; and the spectral bandwidth of the first spectrogram is compared with a first spectral bandwidth threshold, the first parameter set is determined as the target parameter set when the spectral bandwidth of the first spectrum is greater than or equal to the first spectral bandwidth threshold, or the second parameter set is determined as the target parameter set when the spectral bandwidth of the first spectrum is less than the first spectral bandwidth threshold, where the first spectral bandwidth threshold is determined through a pre-experiment.

For example, the spectral bandwidth of the first spectrogram may be a half-height spectral width of a spectrum, or may be a spectral width that is of a spectrum and that corresponds to a user-defined amplitude threshold. The user-defined amplitude threshold may be a preset proper threshold.

Based on the foregoing technical solution, the first spectral bandwidth threshold determined through an experiment is compared with the spectral bandwidth of the first spectrogram, so that accurate frequency values corresponding to up and down chirps of received and transmitted signals can be determined, to select an accurate parameter set to resolve the radial velocity of the target object and the range to the target object. This avoids a problem of ambiguity in measuring the radial velocity of the target object and the range to the target object in a BPD-based receiving manner. System performance is further ensured without increasing system complexity.

With reference to the first aspect, in some implementations of the first aspect, a third parameter set is determined based on the first parameter set, and a fourth parameter set is determined based on the second parameter set, where the third parameter set and the fourth parameter set belong to the candidate parameter sets. The third parameter set includes a time of flight $\tau_1$ and the Doppler frequency $f_{d1}$, and the time of flight $\tau_1$ is determined by using the following formula (3):

$$\tau_1 = \frac{f_{b1}}{\alpha} \ (3);$$

and

the fourth parameter set includes a time of flight $\tau_2$ and the Doppler frequency $f_{d2}$, and the time of flight $\tau_2$ is determined by using the following formula (4):

$$\tau_2 = \frac{f_{b2}}{\alpha} \ (4),$$

where

$\alpha$ represents a frequency modulation slope of the first local oscillator signal.

Based on the foregoing technical solution, after it is identified that the velocity and range ambiguity exists in the currently obtained signal, the parameter set is further processed, to provide a prerequisite for velocity and range ambiguity resolution.

With reference to the first aspect, in some implementations of the first aspect, before the target parameter set is determined based on the first data segment, a second local oscillator signal is determined, and a third frequency sweep curve is determined based on a signal characteristic of the second local oscillator signal, where the second local oscillator signal is a local oscillator signal in a reference channel, and the second local oscillator signal and the first local oscillator signal are from a same light source; and the third frequency sweep curve in time-frequency domain is translated based on the third parameter set, to obtain a fourth frequency sweep curve, and the third frequency sweep curve in time-frequency domain is translated based on the fourth parameter set, to obtain a fifth frequency sweep curve.

For example, the signal characteristic and a waveform of the second local oscillator signal are the same as those of the first local oscillator signal. Therefore, the third frequency sweep curve may reuse the first frequency sweep curve.

For example, in a time-frequency domain coordinate system, time is a horizontal axis, and frequency is a vertical axis. Therefore, $\tau_1$ in the third parameter set corresponds to a step size of translation of the third frequency sweep curve in time domain, and $f_{d1}$ in the third parameter set corresponds to a step size of translation of the third frequency sweep curve in frequency domain. Similarly, $\tau_2$ in the fourth parameter set corresponds to a step size of translation of the third frequency sweep curve in time domain, and $f_{d2}$ in the fourth parameter set corresponds to a step size of translation of the third frequency sweep curve in frequency domain.

Based on the foregoing technical solution, the third frequency sweep curve of the reference channel can be estimated, and then the fourth frequency sweep curve and the fifth frequency sweep curve can be estimated, to provide a prerequisite for velocity and range ambiguity resolution.

With reference to the first aspect, in some implementations of the first aspect, a second time-to-frequency conversion is performed on the first data segment, to determine a second spectrogram, where the second spectrogram indicates a time-varying relationship of a frequency difference between the first frequency sweep curve and the second frequency sweep curve in the first time period; a third spectrogram is determined based on the third frequency sweep curve and the fourth frequency sweep curve, and a fourth spectrogram is determined based on the third frequency sweep curve and the fifth frequency sweep curve, where the third spectrogram indicates a time-varying relationship of a frequency difference between the third frequency sweep curve and the fourth frequency sweep curve in a second time period, the fourth spectrogram indicates a time-varying relationship of a frequency difference between the third frequency sweep curve and the fifth frequency sweep curve in a third time period, the second time period has an intersection with a time period between an end point of a first linear frequency sweep segment of the third frequency sweep curve and a start point of a second linear frequency sweep segment of the fourth frequency sweep curve, and the third time period has an intersection with a time period between the end point of the first linear frequency sweep curve and a start point of a second linear frequency sweep segment of the fifth frequency sweep curve; the second spectrogram is compared with the third spectrogram to determine a first matching degree, and the second spectrogram is compared with the fourth spectrogram to determine a second matching degree; and the third parameter set is determined as the target parameter set when the first matching degree is higher, or the fourth parameter set is determined as the target parameter set when the second matching degree is higher.

It should be understood that a higher similarity between spectrograms indicates a higher matching degree determined by comparing the spectrograms.

Based on the foregoing technical solution, waveform features of a local oscillator signal and an echo signal in a reference channel are used as a reference template, and are compared with waveform features of a local oscillator signal and an echo signal in a measurement channel, to select an accurate parameter set to resolve the radial velocity of the target object and the range to the target object. This avoids a problem of ambiguity in measuring the radial velocity of the target object and the range to the target object in a BPD-based receiving manner. System performance is further ensured without increasing system complexity.

With reference to the first aspect, in some implementations of the first aspect, the second time-to-frequency conversion includes a short-time Fourier transform or a wavelet transform.

Based on the foregoing technical solution, a plurality of second time-to-frequency conversion manners are provided, thereby improving signal processing flexibility.

With reference to the first aspect, in some implementations of the first aspect, a first time-to-frequency conversion is performed on the first data segment to determine a first spectrogram, where the first spectrogram indicates a relationship between an amplitude and a frequency of the first data segment; a second beat frequency signal is determined based on the third frequency sweep curve and the fourth frequency sweep curve, and a third beat frequency signal is determined based on the third frequency sweep curve and the fifth frequency sweep curve; a second data segment and a third data segment are determined, where the second data segment is a signal intercepted from the second beat frequency signal in a second time period, the third data segment is a signal intercepted from the third beat frequency signal in a third time period, the second time period has an intersection with a time period between an end point of a first linear frequency sweep segment of the third frequency sweep curve and a start point of a second linear frequency sweep segment of the fourth frequency sweep curve, and the third time period has an intersection with a time period between the end point of the first linear frequency sweep segment of the third frequency sweep curve and a start point of a second linear frequency sweep segment of the fifth frequency sweep curve; the first time-to-frequency conversion is separately performed on the second data segment and the third data segment, to determine a fifth spectrogram and a sixth spectrogram, where the fifth spectrogram indicates a relationship between an amplitude and a frequency of the second data segment, and the sixth spectrogram indicates a relationship between an amplitude and a frequency of the third data segment; a cross-correlation operation is performed on the fifth spectrogram and the first spectrogram to determine a seventh spectrogram, and a cross-correlation operation is performed on the sixth spectrogram and the first spectrogram to determine an eighth spectrogram; a quantity of first spectrum features of the seventh spectrogram is determined as a first quantity, and a quantity of first spectrum features of the eighth spectrogram is determined as a second quantity, where the first spectrum feature includes a maximum value existing in a spectrum, a signal-to-noise ratio of the spectrum being greater than a first threshold, or a spectrum waveform symmetry; the third parameter set is determined as the target parameter set when the first quantity is greater than the second quantity, or the fourth parameter set is determined as the target parameter set when the second quantity is greater than the first quantity; or a first score corresponding to the seventh spectrogram is determined, where the first score is obtained by performing weighting calculation on a score corresponding to each of the first spectrum features of the seventh spectrogram; and a second score corresponding to the eighth spectrogram is determined, where the second score is obtained by performing weighting calculation on a score corresponding to each of the first spectrum features of the eighth spectrogram; and the third parameter set is determined as the target parameter set when the first score is greater than the second score, or the fourth parameter set is determined as the target parameter set when the second score is greater than the first score.

For example, similar to the first spectrogram, both the fifth spectrogram and the sixth spectrogram are spectrums. To be specific, the fifth spectrogram indicates a relationship between an amplitude and a frequency of the second data segment, and the sixth spectrogram indicates a relationship between an amplitude and a frequency of the third data segment.

For example, because the spectrogram may be represented by using a spectrum function, a cross-correlation operation between the spectrograms may be a cross-correlation operation between spectrum functions corresponding to the spectrograms.

For example, the performing the weighting calculation on the score may be performing weighting summation calculation on a score corresponding to each first spectrum feature, or may be performed in another operation manner. This is not limited in embodiments of this application.

For example, different first spectrum features may correspond to different scores and/or weights. For example, different maximum values respectively existing in two spectrums correspond to different weights. The first spectrum feature of a seventh spectrum is a spectrum waveform symmetry, and the first spectrum feature of an eighth spectrum is a maximum value existing in the spectrum. In this case, the spectrum waveform symmetry and the maximum value existing in the spectrum correspond to different scores.

Based on the foregoing technical solution, the cross-correlation operation is performed on the beat frequency signal in the reference channel and the beat frequency signal in the measurement channel, to select an accurate parameter set to resolve the radial velocity of the target object and the range to the target object. This avoids a problem of ambiguity in measuring the radial velocity of the target object and the range to the target object in a BPD-based receiving manner. System performance is further ensured without increasing system complexity.

With reference to the first aspect, in some implementations of the first aspect, the first time-to-frequency conversion includes a fast Fourier transform.

According to a second aspect, a signal processing apparatus is provided. The apparatus includes a determining unit, a signal generation unit, and a processing unit. The determining unit is configured to determine a first frequency sweep curve, where a first frequency modulation periodicity of the first frequency sweep curve includes an up chirp segment and a down chirp segment, the up chirp segment includes a first linear frequency sweep segment and a first preset frequency sweep segment, the down chirp segment includes a second linear frequency sweep segment and a second preset frequency sweep segment, and the first preset frequency sweep segment is connected to the second preset frequency sweep segment. The signal generation unit is configured to generate, based on the first frequency sweep curve, a first local oscillator signal and a first transmit signal that have a same waveform. The processing unit is configured to: perform a frequency mixing operation on the first local oscillator signal and a first echo signal, to determine a first beat frequency signal, where the first echo signal is a signal obtained by reflecting the first transmit signal off a target object; determine a first data segment, where the first data segment is a signal intercepted from the first beat frequency signal in a first time period, and the first time period has an intersection with a time period between an end point of the first linear frequency sweep segment of the first frequency sweep curve and a start point of a second linear frequency sweep segment of a second frequency sweep curve corresponding to the first echo signal; and determine a target parameter set based on the first data segment, where the target parameter set is used to resolve a range to the target object and a radial velocity of the target object.

Based on the foregoing technical solution, during actual application, data at up-down chirp turn points of the local oscillator signal and the echo signal is not used for velocity and range estimation. Therefore, special waveform design is performed on a signal in the time period, and processing is performed based on the signal in the time period, to resolve the radial velocity of the target object and the range to the target object. This can not only ensure that a point rate of the system is not affected, but also can improve robustness and applicability of signal processing. In addition, a hardware structure of the system is slightly changed.

With reference to the second aspect, in some implementations of the second aspect, a waveform of the first preset frequency sweep segment and a waveform of the second preset frequency sweep segment each include a rectangular wave, a sine wave, or a sawtooth wave.

Based on the foregoing technical solution, a plurality of waveforms may be used to represent the waveform of the first preset frequency sweep segment and the waveform of the second preset frequency sweep segment, thereby improving signal processing flexibility.

With reference to the second aspect, in some implementations of the second aspect, before the processing unit determines the target parameter set based on the first data segment, the processing unit is further configured to: determine a corresponding up chirp frequency $f_{bu}$ based on an up chirp segment of the first beat frequency signal before determining the target parameter set based on the first data segment, and determine a corresponding down chirp frequency $f_{bd}$ based on a down chirp segment of the first beat frequency signal; and determine a first parameter set and a second parameter set based on the up chirp frequency $f_{bu}$ and the down chirp frequency $f_{bd}$, where the first parameter set and the second parameter set belong to candidate parameter sets, and the target parameter set is a parameter set selected from the candidate parameter sets.

Based on the foregoing technical solution, whether velocity and range ambiguity exists in a currently obtained signal can be identified, and a data condition is provided for subsequently resolving the target range and the radial velocity.

With reference to the second aspect, in some implementations of the second aspect, a beat frequency $f_{b1}$ and a Doppler frequency $f_{d1}$ that are included in the first parameter set are separately determined by using the following formula (5):

$$f_{b1} = (f_{bu} + f_{bd})/2, f_{d1} = (f_{bd} - f_{bu})/2 \ (5);$$

and

a beat frequency $f_{b2}$ and a Doppler frequency $f_{d2}$ that are included in the second parameter set are separately determined by using the following formula (6):

$$f_{b2} = (f_{bd} - f_{bu})/2, f_{d2} = (f_{bu} + f_{bd})/2 \ (6).$$

Based on the foregoing technical solution, the candidate parameter set can be determined, to provide a data condition for subsequently resolving the target range and the radial velocity.

With reference to the second aspect, in some implementations of the second aspect, the processing unit is specifically configured to: perform a first time-to-frequency conversion on the first data segment to determine a first spectrogram, where the first spectrogram indicates a relationship between an amplitude and a frequency of the first data segment; determine a spectral bandwidth of the first spectrogram based on the first spectrogram; and compare the spectral bandwidth of the first spectrogram with a first spectral bandwidth threshold, and determine the first parameter set as the target parameter set when the spectral bandwidth of the first spectrum is greater than or equal to the first spectral bandwidth threshold, or determine the second parameter set as the target parameter set when the spectral bandwidth of the first spectrum is less than the first spectral bandwidth threshold, where the first spectral bandwidth threshold is determined through a pre-experiment.

Based on the foregoing technical solution, the first spectral bandwidth threshold determined through an experiment is compared with the spectral bandwidth of the first spectrogram, so that accurate frequency values corresponding to up and down chirps of received and transmitted signals can be determined, to select an accurate parameter set to resolve the radial velocity of the target object and the range to the target object. This avoids a problem of ambiguity in measuring the radial velocity of the target object and the range to the target object in a BPD-based receiving manner. System performance is further ensured without increasing system complexity.

With reference to the second aspect, in some implementations of the second aspect, the processing unit is further configured to: determine a third parameter set based on the first parameter set, and determine a fourth parameter set based on the second parameter set, where the third parameter set and the fourth parameter set belong to the candidate parameter sets; and the third parameter set includes a time of flight $\tau_1$ and the Doppler frequency $f_{d1}$, and the time of flight $\tau_1$ is determined by using the following formula (7):

$$\tau_1 = \frac{f_{b1}}{\alpha} \ (7);$$

and

the fourth parameter set includes a time of flight $\tau_2$ and the Doppler frequency $f_{d2}$, and the time of flight $\tau_2$ is determined by using the following formula (8):

$$\tau_2 = \frac{f_{b2}}{\alpha} \ (8),$$

where

$\alpha$ represents a frequency modulation slope of the first local oscillator signal.

Based on the foregoing technical solution, after it is identified that the velocity and range ambiguity exists in the currently obtained signal, the parameter set is further processed, to provide a prerequisite for velocity and range ambiguity resolution.

With reference to the second aspect, in some implementations of the second aspect, before the processing unit determines the target parameter set based on the first data segment, the processing unit is further configured to: determine a second local oscillator signal, and determine a third frequency sweep curve based on a signal characteristic of the second local oscillator signal, where the second local oscillator signal is a local oscillator signal in a reference channel, and the second local oscillator signal and the first local oscillator signal are from a same light source; and translate, based on the third parameter set, the third frequency sweep curve in time-frequency domain to obtain a fourth frequency sweep curve, and translate, based on the fourth parameter set, the third frequency sweep curve in time-frequency domain to obtain a fifth frequency sweep curve.

Based on the foregoing technical solution, the third frequency sweep curve of the reference channel can be estimated, and then the fourth frequency sweep curve and the fifth frequency sweep curve can be estimated, to provide a prerequisite for velocity and range ambiguity resolution.

With reference to the second aspect, in some implementations of the second aspect, the processing unit is specifically configured to: perform a second time-to-frequency conversion on the first data segment to determine a second spectrogram, where the second spectrogram indicates a time-varying relationship of a frequency difference between the first frequency sweep curve and the second frequency sweep curve in the first time period; determine a third spectrogram based on the third frequency sweep curve and the fourth frequency sweep curve, and determine a fourth spectrogram based on the third frequency sweep curve and the fifth frequency sweep curve, where the third spectrogram indicates a time-varying relationship of a frequency difference between the third frequency sweep curve and the fourth frequency sweep curve in a second time period, the fourth spectrogram indicates a time-varying relationship of a frequency difference between the third frequency sweep curve and the fifth frequency sweep curve in a third time period, the second time period has an intersection with a time period between an end point of a first linear frequency sweep segment of the third frequency sweep curve and a start point of a second linear frequency sweep segment of the fourth frequency sweep curve, and the third time period has an intersection with a time period between the end point of the first linear frequency sweep segment of the third frequency sweep curve and a start point of a second linear frequency sweep segment of the fifth frequency sweep curve; compare the second spectrogram with the third spectrogram to determine a first matching degree, and compare the second spectrogram with the fourth spectrogram to determine a second matching degree; and determine the third parameter set as the target parameter set when the first matching degree is higher, or determine the fourth parameter set as the target parameter set when the second matching degree is higher.

Based on the foregoing technical solution, waveform features of a local oscillator signal and an echo signal in a reference channel are used as a reference template, and are compared with waveform features of a local oscillator signal and an echo signal in a measurement channel, to select an accurate parameter set to resolve the radial velocity of the target object and the range to the target object. This avoids a problem of ambiguity in measuring the radial velocity of the target object and the range to the target object in a BPD-based receiving manner. System performance is further ensured without increasing system complexity.

With reference to the second aspect, in some implementations of the second aspect, the second time-to-frequency conversion includes a short-time Fourier transform or a wavelet transform.

Based on the foregoing technical solution, a plurality of second time-to-frequency conversion manners are provided, thereby improving signal processing flexibility.

With reference to the second aspect, in some implementations of the second aspect, the processing unit is specifically configured to: perform a first time-to-frequency conversion on the first data segment to determine a first spectrogram, where the first spectrogram indicates a relationship between an amplitude and a frequency of the first data segment; determine a second beat frequency signal based on the third frequency sweep curve and the fourth frequency sweep curve, and determine a third beat frequency signal based on the third frequency sweep curve and the fifth frequency sweep curve; determine a second data segment and a third data segment, where the second data segment is a signal intercepted from the second beat frequency signal in a second time period, the third data segment is a signal intercepted from the third beat frequency signal in a third time period, the second time period has an intersection with a time period between an end point of a first linear frequency sweep segment of the third frequency sweep curve and a start point of a second linear frequency sweep segment of the fourth frequency sweep curve, and the third time period has an intersection with a time period between the end point of the first linear frequency sweep segment of the third frequency sweep curve and a start point of a second linear frequency sweep segment of the fifth frequency sweep curve; separately perform the first time-to-frequency conversion on the second data segment and the third data segment, to determine a fifth spectrogram and a sixth spectrogram, where the fifth spectrogram indicates a relationship between an amplitude and a frequency of the second data segment, and the sixth spectrogram indicates a relationship between an amplitude and a frequency of the third data segment; perform a cross-correlation operation on the fifth spectrogram and the first spectrogram to determine a seventh spectrogram, and perform a cross-correlation operation on the sixth spectrogram and the first spectrogram to determine an eighth spectrogram; determine a quantity of first spectrum features of the seventh spectrogram as a first quantity, and determine a quantity of first spectrum features of the eighth spectrogram as a second quantity, where the first spectrum feature includes a maximum value existing in a spectrum, a signal-to-noise ratio of the spectrum being greater than a first threshold, or a spectrum waveform symmetry; and determine the third parameter set as the target parameter set when the first quantity is greater than the second quantity, or determine the fourth parameter set as the target parameter set when the second quantity is greater than the first quantity; or determine a first score corresponding to the seventh spectrogram, where the first score is obtained by performing weighting calculation on a score corresponding to each of the first spectrum features of the seventh spectrogram; and determine a second score corresponding to the eighth spectrogram, where the second score is obtained by performing weighting calculation on a score corresponding to each of the first spectrum features of the eighth spectrogram; and determine the third parameter set as the target parameter set when the first score is greater than the second score, or determine the fourth parameter set as the target parameter set when the second score is greater than the first score.

Based on the foregoing technical solution, the cross-correlation operation is performed on the beat frequency signal in the reference channel and the beat frequency signal in the measurement channel, to select an accurate parameter set to resolve the radial velocity of the target object and the range to the target object. This avoids a problem of ambiguity in measuring the radial velocity of the target object and the range to the target object in a BPD-based receiving manner. System performance is further ensured without increasing system complexity.

With reference to the second aspect, in some implementations of the second aspect, the first time-to-frequency conversion includes a fast Fourier transform.

According to a third aspect, a signal processing method is provided. The method includes: determining a first frequency sweep curve, where a first frequency modulation periodicity of the first frequency sweep curve includes an up chirp segment and a down chirp segment that are connected in sequence, and the up chirp segment and the down chirp segment are linear frequency sweep segments; generating, based on the first frequency sweep curve, a first local oscillator signal and a first transmit signal that have a same waveform; performing a frequency mixing operation on the first local oscillator signal and a first echo signal, to determine a first beat frequency signal, where the first echo signal is a signal obtained by reflecting the first transmit signal off a target object; determining a first data segment, where the first data segment is a signal intercepted from the first beat frequency signal in a first time period, and the first time period has an intersection with a time period between an up-down chirp turn point of the first frequency sweep curve and an up-down chirp turn point of a second frequency sweep curve corresponding to the first echo signal; and determining a target parameter set based on the first data segment, where the target parameter set is used to resolve a range to the target object and a radial velocity of the target object.

Based on the foregoing technical solution, processing can be performed based on a signal in a first time period, to resolve the radial velocity of the target object and the range to the target object.

With reference to the third aspect, in some implementations of the third aspect, before the target parameter set is determined based on the first data segment, a corresponding up chirp frequency $f_{bu}$ is determined based on an up chirp segment of the first beat frequency signal, and a corresponding down chirp frequency $f_{bd}$ is determined based on a down chirp segment of the first beat frequency signal; and a first parameter set and a second parameter set are determined based on the up chirp frequency $f_{bu}$ and the down chirp frequency $f_{bd}$, where the first parameter set and the second parameter set belong to candidate parameter sets, and the target parameter set is a parameter set selected from the candidate parameter sets.

For example, a fourth beat frequency signal may be determined based on an up chirp segment of the first beat frequency signal, and a fifth beat frequency signal may be determined based on a down chirp segment of the first beat frequency signal. Specifically, the fourth beat frequency signal is obtained by performing a frequency mixing operation on the first local oscillator signal and an up chirp in the first echo signal. Similarly, the fifth beat frequency signal is obtained by performing a frequency mixing operation on the first local oscillator signal and a down chirp in the first echo signal. Then, a first time-to-frequency conversion is performed on the fourth beat frequency signal and the fifth beat frequency signal to obtain corresponding spectrums $S_U(f)$ and $S_D(f)$. Then, signal detection is separately performed on the spectrums $S_U(f)$ and $S_D(f)$, to determine the up chirp frequency $f_{bu}$ and the down chirp frequency $f_{bd}$ that correspond to the first beat frequency signal. Finally, a Doppler frequency $f_{d\_max}$ corresponding to a maximum velocity that can be measured by a lidar system is determined, $f_{bu}$ is compared with $f_{d\_max}$, and it is determined, based on a comparison result, whether ambiguity occurs in a system resolving result. The following provides a specific comparison manner.

If $f_{bu} > f_{d\_max}$, no ambiguity occurs in the system resolving result.

If $f_{bu} \leq f_{d\_max}$, ambiguity may occur in the system resolving result.

Based on the foregoing technical solution, the first parameter set and the second parameter set can be determined, to identify that velocity and range ambiguity exists in a currently obtained signal, and provide a data condition for subsequently resolving the target range and the radial velocity.

With reference to the third aspect, in some implementations of the third aspect, a beat frequency $f_{b1}$ and a Doppler frequency $f_{d1}$ that are included in the first parameter set are separately determined by using the following formula (9):

$$f_{b1} = (f_{bu} + f_{bd})/2, f_{d1} = (f_{bd} - f_{bu})/2 \ (9);$$

and
a beat frequency $f_{b2}$ and a Doppler frequency $f_{d2}$ that are included in the second parameter set are separately determined by using the following formula (10):

$$f_{b2} = (f_{bd} - f_{bu})/2, f_{d2} = (f_{bu} + f_{bd})/2 \ (10).$$

Based on the foregoing technical solution, the candidate parameter set can be determined, to provide a data condition for subsequently resolving the target range and the radial velocity.

With reference to the third aspect, in some implementations of the third aspect, a first time-to-frequency conversion is performed on the first data segment to determine a first spectrogram, where the first spectrogram indicates a relationship between an amplitude and a frequency of the first data segment; a spectral bandwidth of the first spectrogram is determined based on the first spectrogram; and the spectral bandwidth of the first spectrogram is compared with a first spectral bandwidth threshold, the first parameter set is determined as the target parameter set when the spectral bandwidth of the first spectrum is greater than or equal to the first spectral bandwidth threshold, or the second parameter set is determined as the target parameter set when the spectral bandwidth of the first spectrum is less than the first spectral bandwidth threshold, where the first spectral bandwidth threshold is determined through a pre-experiment.

Based on the foregoing technical solution, the first spectral bandwidth threshold determined through an experiment is compared with the spectral bandwidth of the first spectrogram, so that accurate frequency values corresponding to up and down chirps of received and transmitted signals can be determined, to select an accurate parameter set to resolve the radial velocity of the target object and the range to the target object. This avoids a problem of ambiguity in measuring the radial velocity of the target object and the range to the target object in a BPD-based receiving manner. System performance is further ensured without increasing system complexity.

With reference to the third aspect, in some implementations of the third aspect, a third parameter set is determined based on the first parameter set, and a fourth parameter set is determined based on the second parameter set, where the third parameter set and the fourth parameter set belong to the candidate parameter sets; and the third parameter set includes a time of flight $\tau_1$ and a Doppler frequency $f_{d1}$, and the time of flight $\tau_1$ is determined by using the following formula (11):

$$\tau_1 = \frac{f_{b1}}{\alpha} \ (11);$$

and
the fourth parameter set includes a time of flight $\tau_2$ and the Doppler frequency $f_{d2}$, and the time of flight $\tau_2$ is determined by using the following formula (12):

$$\tau_2 = \frac{f_{b2}}{\alpha} \ (12),$$

where
$\alpha$ represents a frequency modulation slope of the first local oscillator signal.

Based on the foregoing technical solution, after it is identified that the velocity and range ambiguity exists in the currently obtained signal, the parameter set is further processed, to provide a prerequisite for velocity and range ambiguity resolution.

With reference to the third aspect, in some implementations of the third aspect, before the target parameter set is determined based on the first data segment, a second local oscillator signal is determined, and a third frequency sweep curve is determined based on a signal characteristic of the second local oscillator signal, where the second local oscillator signal is a local oscillator signal in a reference channel, and the second local oscillator signal and the first local oscillator signal are from a same light source; and the third frequency sweep curve in time-frequency domain is translated based on the third parameter set, to obtain a fourth frequency sweep curve, and the third frequency sweep curve in time-frequency domain is translated based on the fourth parameter set, to obtain a fifth frequency sweep curve.

Based on the foregoing technical solution, the third frequency sweep curve of the reference channel can be estimated, and then the fourth frequency sweep curve and the fifth frequency sweep curve can be estimated, to provide a prerequisite for velocity and range ambiguity resolution.

With reference to the third aspect, in some implementations of the third aspect, a second time-to-frequency conversion is performed on the first data segment, to determine a second spectrogram, where the second spectrogram indicates a time-varying relationship of a frequency difference between the first frequency sweep curve and the second frequency sweep curve in the first time period; a third spectrogram is determined based on the third frequency sweep curve and the fourth frequency sweep curve, and a fourth spectrogram is determined based on the third frequency sweep curve and the fifth frequency sweep curve, where the third spectrogram indicates a time-varying relationship of a frequency difference between the third frequency sweep curve and the fourth frequency sweep curve in a second time period, the fourth spectrogram indicates a time-varying relationship of a frequency difference between the third frequency sweep curve and the fifth frequency sweep curve in a third time period, the second time period has an intersection with a time period between an up-down chirp turn point of the third frequency sweep curve and an up-down chirp turn point of the fourth frequency sweep curve, the third time period has an intersection with the time period between the up-down chirp turn point of the third frequency sweep curve and an up-down chirp turn point of the fifth frequency sweep curve; comparing the second spectrogram with the third spectrogram to determine a first matching degree, and comparing the second spectrogram with the fourth spectrogram to determine a second matching degree; and determining the third parameter set as the target parameter set when the first matching degree is higher, or determining the fourth parameter set as the target parameter set when the second matching degree is higher.

Based on the foregoing technical solution, waveform features of a local oscillator signal and an echo signal in a reference channel are used as a reference template, and are compared with waveform features of a local oscillator signal and an echo signal in a measurement channel, to select an accurate parameter set to resolve the radial velocity of the target object and the range to the target object. This avoids a problem of ambiguity in measuring the radial velocity of the target object and the range to the target object in a BPD-based receiving manner. System performance is further ensured without increasing system complexity.

With reference to the third aspect, in some implementations of the third aspect, the second time-to-frequency conversion includes a short-time Fourier transform or a wavelet transform.

Based on the foregoing technical solution, a plurality of second time-to-frequency conversion manners are provided, thereby improving signal processing flexibility.

With reference to the third aspect, in some implementations of the third aspect, a first time-to-frequency conversion is performed on the first data segment to determine a first spectrogram, where the first spectrogram indicates a relationship between an amplitude and a frequency of the first data segment; determining a second beat frequency signal based on the third frequency sweep curve and the fourth frequency sweep curve, and determining a third beat frequency signal based on the third frequency sweep curve and the fifth frequency sweep curve; determining a second data segment and a third data segment, where the second data segment is a signal intercepted from the second beat frequency signal in a second time period, and the third data segment is a signal intercepted from the third beat frequency signal in a third time period, where the second time period has an intersection with a time period between an up-down chirp turn point of the third frequency sweep curve and an up-down chirp turn point of the fourth frequency sweep curve, the third time period has an intersection with the time period between the up-down chirp turn point of the third frequency sweep curve and an up-down chirp turn point of the fifth frequency sweep curve; separately performing the first time-to-frequency conversion on the second data segment and the third data segment to determine a fifth spectrogram and a sixth spectrogram, where the fifth spectrogram indicates a relationship between an amplitude and a frequency of the second data segment, and the sixth spectrogram indicates a relationship between an amplitude and a frequency of the third data segment; performing a cross-correlation operation on the fifth spectrogram and the first spectrogram to determine a seventh spectrogram, and performing a cross-correlation operation on the sixth spectrogram and the first spectrogram to determine an eighth spectrogram; determining a quantity of first spectrum features of the seventh spectrogram as a first quantity, and determining a quantity of first spectrum features of the eighth spectrogram as a second quantity, where the first spectrum feature includes a maximum value existing in a spectrum, a signal-to-noise ratio of the spectrum being greater than a first threshold, or a spectrum waveform symmetry; and determining the third parameter set as the target parameter set when the first quantity is greater than the second quantity, or determining the fourth parameter set as the target parameter set when the second quantity is greater than the first quantity; or determining a first score corresponding to the seventh spectrogram, where the first score is obtained by performing weighting calculation on a score corresponding to each of the first spectrum features of the seventh spectrogram; and determining a second score corresponding to the eighth spectrogram, where the second score is obtained by performing weighting calculation on a score corresponding to each of the first spectrum features of the eighth spectrogram; and determining the third parameter set as the target parameter set when the first score is greater than the second score, or determining the fourth parameter set as the target parameter set when the second score is greater than the first score.

Based on the foregoing technical solution, the cross-correlation operation is performed on the beat frequency signal in the reference channel and the beat frequency signal in the measurement channel, to select an accurate parameter set to resolve the radial velocity of the target object and the range to the target object. This avoids a problem of ambiguity in measuring the radial velocity of the target object and the range to the target object in a BPD-based receiving manner. System performance is further ensured without increasing system complexity.

With reference to the third aspect, in some implementations of the third aspect, the first time-to-frequency conversion includes a fast Fourier transform.

According to a fourth aspect, a signal processing apparatus is provided. The apparatus includes: a determining unit, a signal generation unit, and a processing unit. The determining unit is configured to: determine a first frequency sweep curve, where a first frequency modulation periodicity of the first frequency sweep curve includes an up chirp segment and a down chirp segment that are connected in sequence, and the up chirp segment and the down chirp segment are linear frequency sweep segments; and generate, based on the first frequency sweep curve, a first local oscillator signal and a first transmit signal that have a same waveform. The signal generation unit is configured to generate, based on the first frequency sweep curve, a first local oscillator signal and a first transmit signal that have a same waveform. The processing unit is configured to: perform a frequency mixing operation on the first local oscillator signal and a first echo signal, to determine a first beat frequency signal, where the first echo signal is a signal obtained by reflecting the first transmit signal off a target object; determine a first data segment, where the first data segment is a signal intercepted from the first beat frequency signal in a first time period, and the first time period has an intersection with a time period between an up-down chirp turn point of the first frequency sweep curve and an up-down chirp turn point of a second frequency sweep curve corresponding to the first echo signal; and determine a target parameter set based on the first data segment, where the target parameter set is used to resolve a range to the target object and a radial velocity of the target object.

Based on the foregoing technical solution, processing can be performed based on a signal corresponding to a first time period, to resolve the radial velocity of the target object and the range to the target object.

With reference to the fourth aspect, in some implementations of the fourth aspect, before the processing unit determines the target parameter set based on the first data segment, the processing unit is further configured to: determine a corresponding up chirp frequency $f_{bu}$ based on an up chirp segment of the first beat frequency signal, and determine a corresponding down chirp frequency $f_{bd}$ based on a down chirp segment of the first beat frequency signal; and determine a first parameter set and a second parameter set based on the up chirp frequency $f_{bu}$ and the down chirp frequency $f_{bd}$, where the first parameter set and the second parameter set belong to candidate parameter sets, and the target parameter set is a parameter set selected from the candidate parameter sets.

Based on the foregoing technical solution, whether velocity and range ambiguity exists in a currently obtained signal can be identified, and a data condition is provided for subsequently resolving the target range and the radial velocity.

With reference to the fourth aspect, in some implementations of the fourth aspect, a beat frequency $f_{b1}$ and a Doppler frequency $f_{d1}$ that are included in the first parameter set are separately determined by using the following formula (13):

$$f_{b1} = (f_{bu} + f_{bd})/2, f_{d1} = (f_{bd} - f_{bu})/2 \ (13);$$

and

a beat frequency $f_{b2}$ and a Doppler frequency $f_{d2}$ that are included in the second parameter set are separately determined by using the following formula (14):

$$f_{b2} = (f_{bd} - f_{bu})/2, f_{d2} = (f_{bu} + f_{bd})/2 \ (14).$$

Based on the foregoing technical solution, the candidate parameter set can be determined, to provide a data condition for subsequently resolving the target range and the radial velocity.

With reference to the fourth aspect, in some implementations of the fourth aspect, the processing unit is specifically configured to: perform a first time-to-frequency conversion on the first data segment to determine a first spectrogram, where the first spectrogram indicates a relationship between an amplitude and a frequency of the first data segment; determine a spectral bandwidth of the first spectrogram based on the first spectrogram; and compare the spectral bandwidth of the first spectrogram with a first spectral bandwidth threshold, and determine the first parameter set as the target parameter set when the spectral bandwidth of the first spectrum is greater than or equal to the first spectral bandwidth threshold, or determine the second parameter set as the target parameter set when the spectral bandwidth of the first spectrum is less than the first spectral bandwidth threshold, where the first spectral bandwidth threshold is determined through a pre-experiment.

Based on the foregoing technical solution, the first spectral bandwidth threshold determined through an experiment is compared with the spectral bandwidth of the first spectrogram, so that accurate frequency values corresponding to up and down chirps of received and transmitted signals can be determined, to select an accurate parameter set to resolve the radial velocity of the target object and the range to the target object. This avoids a problem of ambiguity in measuring the radial velocity of the target object and the range to the target object in a BPD-based receiving manner. System performance is further ensured without increasing system complexity.

With reference to the fourth aspect, in some implementations of the fourth aspect, the processing unit is further configured to: determine a third parameter set based on the first parameter set, and determine a fourth parameter set based on the second parameter set, where the third parameter set and the fourth parameter set belong to the candidate parameter sets; and the third parameter set includes a time of flight $\tau_1$ and a Doppler frequency $f_{d1}$, and the time of flight $\tau_1$ is determined by using the following formula (15):

$$\tau_1 = \frac{f_{b1}}{\alpha} \ (15);$$

and
the fourth parameter set includes a time of flight $\tau_2$ and the Doppler frequency $f_{d2}$, and the time of flight $\tau_2$ is determined by using the following formula (16):

$$\tau_2 = \frac{f_{b2}}{\alpha} \ (16),$$

where
$\alpha$ represents a frequency modulation slope of the first local oscillator signal.

Based on the foregoing technical solution, after it is identified that the velocity and range ambiguity exists in the currently obtained signal, the parameter set is further processed, to provide a prerequisite for velocity and range ambiguity resolution.

With reference to the fourth aspect, in some implementations of the fourth aspect, before the processing unit determines the target parameter set based on the first data segment, the processing unit is further configured to: determine a second local oscillator signal, and determine a third frequency sweep curve based on a signal characteristic of the second local oscillator signal, where the second local oscillator signal is a local oscillator signal in a reference channel, and the second local oscillator signal and the first local oscillator signal are from a same light source; and translate, based on the third parameter set, the third frequency sweep curve in time-frequency domain to obtain a fourth frequency sweep curve, and translate, based on the fourth parameter set, the third frequency sweep curve in time-frequency domain to obtain a fifth frequency sweep curve.

Based on the foregoing technical solution, the third frequency sweep curve of the reference channel can be estimated, and then the fourth frequency sweep curve and the fifth frequency sweep curve can be estimated, to provide a prerequisite for velocity and range ambiguity resolution.

With reference to the fourth aspect, in some implementations of the fourth aspect, the processing unit is specifically configured to: perform a second time-to-frequency conversion on the first data segment to determine a second spectrogram, where the second spectrogram indicates a time-varying relationship of a frequency difference between the first frequency sweep curve and the second frequency sweep curve in the first time period; determine a third spectrogram based on the third frequency sweep curve and the fourth frequency sweep curve, and determine a fourth spectrogram based on the third frequency sweep curve and the fifth frequency sweep curve, where the third spectrogram indicates a time-varying relationship of a frequency difference between the third frequency sweep curve and the fourth frequency sweep curve in a second time period, the fourth spectrogram indicates a time-varying relationship of a frequency difference between the third frequency sweep curve and the fifth frequency sweep curve in a third time period, the second time period has an intersection with a time period between an up-down chirp turn point of the third frequency sweep curve and an up-down chirp turn point of the fourth frequency sweep curve, the third time period has an intersection with a time period between the up-down chirp turn point of the third frequency sweep curve and an up-down chirp turn point of the fifth frequency sweep curve; compare the second spectrogram with the third spectrogram to determine a first matching degree, and compare the second spectrogram with the fourth spectrogram to determine a second matching degree; and determine the third parameter set as the target parameter set when the first matching degree is higher, or determine the fourth parameter set as the target parameter set when the second matching degree is higher.

Based on the foregoing technical solution, waveform features of a local oscillator signal and an echo signal in a reference channel are used as a reference template, and are compared with waveform features of a local oscillator signal and an echo signal in a measurement channel, to select an accurate parameter set to resolve the radial velocity of the target object and the range to the target object. This avoids a problem of ambiguity in measuring the radial velocity of the target object and the range to the target object in a BPD-based receiving manner. System performance is further ensured without increasing system complexity.

With reference to the fourth aspect, in some implementations of the fourth aspect, the second time-to-frequency conversion includes a short-time Fourier transform or a wavelet transform.

Based on the foregoing technical solution, a plurality of second time-to-frequency conversion manners are provided, thereby improving signal processing flexibility.

With reference to the fourth aspect, in some implementations of the fourth aspect, the processing unit is specifically configured to: perform a first time-to-frequency conversion on the first data segment to determine a first spectrogram, where the first spectrogram indicates a relationship between an amplitude and a frequency of the first data segment; determine a second beat frequency signal based on the third frequency sweep curve and the fourth frequency sweep curve, and determine a third beat frequency signal based on the third frequency sweep curve and the fifth frequency sweep curve; determine a second data segment and a third data segment, where the second data segment is a signal intercepted from the second beat frequency signal in a second time period, the third data segment is a signal intercepted from the third beat frequency signal in a third time period, the second time period has an intersection with the up-down chirp turn point of the third frequency sweep curve and an up-down chirp turn point of the fourth frequency sweep curve, and the third time period has an intersection with the time period between the up-down chirp turn point of the third frequency sweep curve and the up-down chirp turn point of the fifth frequency sweep curve; separately perform the first time-to-frequency conversion on the second data segment and the third data segment, to determine a fifth spectrogram and a sixth spectrogram, where the fifth spectrogram indicates a relationship between an amplitude and a frequency of the second data segment, and the sixth spectrogram indicates a relationship between an amplitude and a frequency of the third data segment; perform a cross-correlation operation on the fifth spectrogram and the first spectrogram to determine a seventh spectrogram, and perform a cross-correlation operation on the sixth spectrogram and the first spectrogram to determine an eighth spectrogram; determine a quantity of first spectrum features of the seventh spectrogram as a first quantity, and determine a quantity of first spectrum features of the eighth spectrogram as a second quantity, where the first spectrum feature includes a maximum value existing in a spectrum, a signal-to-noise ratio of the spectrum being greater than a first threshold, or a spectrum waveform symmetry; and determine the third parameter set as the target parameter set when the first quantity is greater than the second quantity, or determine the fourth parameter set as the target parameter set when the second quantity is greater than the first quantity; or determine a first score corresponding to the seventh spectrogram, where the first score is obtained by performing weighting calculation on a score corresponding to each of the first spectrum features of the seventh spectrogram; and determine a second score corresponding to the eighth spectrogram, where the second score is obtained by performing weighting calculation on a score corresponding to each of the first spectrum features of the eighth spectrogram; and determine the third parameter set as the target parameter set when the first score is greater than the second score, or determine the fourth parameter set as the target parameter set when the second score is greater than the first score.

Based on the foregoing technical solution, the cross-correlation operation is performed on the beat frequency signal in the reference channel and the beat frequency signal in the measurement channel, to select an accurate parameter set to resolve the radial velocity of the target object and the range to the target object. This avoids a problem of ambiguity in measuring the radial velocity of the target object and the range to the target object in a BPD-based receiving manner. System performance is further ensured without increasing system complexity.

With reference to the fourth aspect, in some implementations of the fourth aspect, the first time-to-frequency conversion includes a fast Fourier transform.

According to a fifth aspect, a signal processing apparatus is provided, including a processor and a memory. The processor is connected to the memory, the memory is configured to store program code, and the processor is configured to invoke the program code, to perform the method in any possible implementation of the method design in the first aspect, or perform the method in any possible implementation of the method design in the third aspect.

According to a sixth aspect, a chip system is provided. The chip system is used in an electronic device. The chip system includes one or more interface circuits and one or more processors. The interface circuit and the processor are interconnected through a line. The interface circuit is configured to: echo a signal from a memory of the electronic device, and send a signal to the processor, where the signal includes computer instructions stored in the memory. When the processor executes the computer instructions, the electronic device performs the method in any possible implementation of the method design in the first aspect, or performs the method in any possible implementation of the method design in the third aspect.

According to a seventh aspect, a computer-readable storage medium is provided. The computer-readable storage medium stores a computer program or instructions. The computer program or the instructions are used to implement the method in any possible implementation of the method design in the first aspect, or are used to implement the method in any possible implementation of the method design in the third aspect.

According to an eighth aspect, a computer program product is provided. When computer program code or instructions are executed on a computer, the computer is enabled to perform the method in any possible implementation of the method design in the first aspect, or perform the method in any possible implementation of the method design in the third aspect.

According to a ninth aspect, a vehicle is provided. The vehicle includes the apparatus according to any one of the possible implementations of the second aspect, the fourth aspect, or the fifth aspect.

## BRIEF DESCRIPTION OF DRAWINGS

FIG. 1 is a functional block diagram of a vehicle 100 according to an embodiment of this application;
FIG. 2 is a diagram of a principle of ranging and velocity measurement based on an FMCW lidar;
FIG. 3 is a diagram of an architecture of an FMCW lidar system;
FIG. 4(a) to FIG. 4(c) are a diagram of ambiguity in resolving a radial velocity of a target object and a range to the target object;
FIG. 5 is a diagram of another principle of ranging and velocity measurement based on an FMCW lidar;
FIG. 6 is a diagram of ranging and velocity measurement by an FMCW lidar in which a receive end is an inphase and quadrature receiver;
FIG. 7 is a diagram of an architecture of an FMCW lidar system according to an embodiment of this application;
FIG. 8 shows a signal processing method according to an embodiment of this application;
FIG. 9 shows another signal processing method according to an embodiment of this application;
FIG. 10 is a diagram of spectrums respectively corresponding to a first parameter set and a second parameter set according to an embodiment of this application;
FIG. 11 shows another signal processing method according to an embodiment of this application;
FIG. 12(a) to FIG. 12(d) are a diagram of a time-to-frequency conversion method for a first data segment according to an embodiment of this application;
FIG. 13(a) to FIG. 13(c) are a diagram of separately comparing a third spectrogram and a fourth spectrogram with a second spectrogram according to an embodiment of this application;
FIG. 14 shows another signal processing method according to an embodiment of this application;
FIG. 15(a) and FIG. 15(b) are a diagram of comparison between instantaneous frequencies of a beat frequency signal according to an embodiment of this application;
FIG. 16(a) to FIG. 16(c) are a diagram of a waveform of a first local oscillator signal with a special waveform design according to an embodiment of this application;
FIG. 17(a) and FIG. 17(b) are a diagram of a result of matched filtering performed based on a special waveform design according to an embodiment of this application;
FIG. 18 is a block diagram of a signal processing apparatus 1800 according to an embodiment of this application;
FIG. 19 is a block diagram of another signal processing apparatus 1900 according to an embodiment of this application; and
FIG. 20 is a block diagram of a computer-readable storage medium 2000 according to an embodiment of this application.

## DESCRIPTION OF EMBODIMENTS

The following describes technical solutions of embodiments in this application with reference to accompanying drawings.

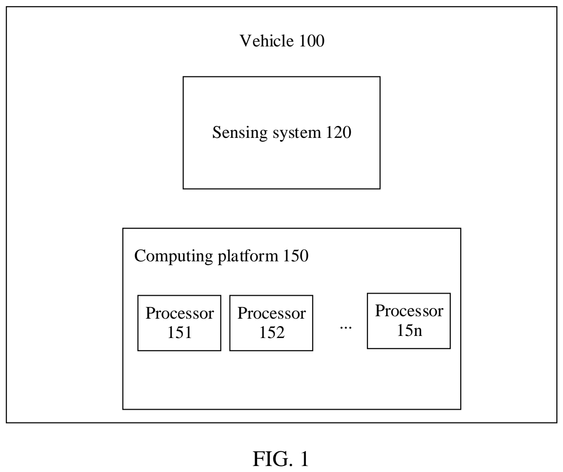

FIG. 1 is a functional block diagram of a vehicle 100 according to an embodiment of this application. The vehicle 100 may include a sensing system 120 and a computing platform 150. The sensing system 120 may include several types of sensors that sense information about an ambient environment of the vehicle 100. For example, the sensing system 120 may include a positioning system. The positioning system may be a global positioning system (global positioning system, GPS), or may be one or more of a BeiDou system or another positioning system, an inertial measurement unit (inertial measurement unit, IMU), a lidar, a millimeter-wave radar, an ultrasonic radar, or a camera apparatus. The lidar may be an FMCW lidar.

Some or all functions of the vehicle 100 may be controlled by the computing platform 150. The computing platform 150 may include processors 151 to 15n (n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (Field Programmable Gate Array, FPGA). In the reconfigurable hardware circuit, a process in which the processor loads a configuration document to implement hardware circuit configuration may be understood as a process in which the processor loads instructions to implement functions of a part or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may include a memory. The memory is configured to store instructions. Some or all of the processors 151 to 15n may invoke the instructions in the memory, to implement a corresponding function.

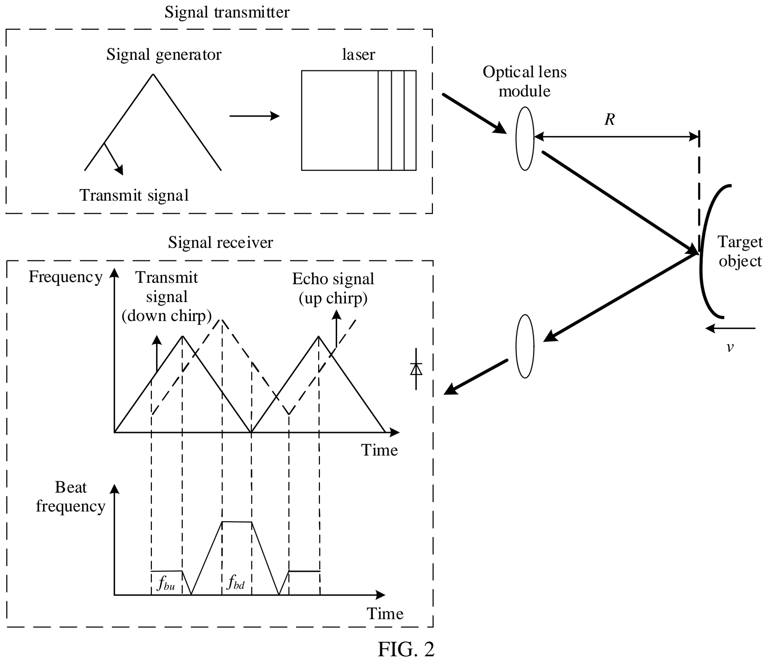

FIG. 2 is a diagram of a principle of ranging and velocity measurement based on an FMCW lidar.

The FMCW lidar generates a frequency modulated continuous wave based on a tunable laser. A frequency modulated continuous wave optical signal may be divided into two channels of signals. One channel of signal is used as a local oscillator signal, and the other channel of signal is emitted to a target object as a transmit signal, and is reflected by a surface of the target object to generate an echo signal. On a photosensitive surface of a detector, a frequency mixing operation is performed on the local oscillator signal and the echo signal to generate a beat frequency signal that is finally received by the detector.

Based on the foregoing laser signal receiving and transmitting processes, the FMCW lidar can perform the frequency mixing operation on the local oscillator signal and the echo signal to obtain the beat frequency signal, and then perform a time-to-frequency conversion through digital signal processing to obtain frequency information of the beat frequency signal, so as to resolve position information of the target object, that is, measure a range to the target object. In addition, the FMCW lidar further can resolve a radial velocity of the target object during ranging. The following provides a ranging and velocity measurement principle of the FMCW lidar.

First, a local oscillator signal and an echo signal that correspond to a transmit signal are obtained. In an existing FMCW lidar system, both the local oscillator signal and the echo signal are linear frequency modulated (chirp) signals, as shown in FIG. 1. Frequency sweep curves corresponding to the local oscillator signal and the echo signal in this example each include an up chirp (up chirp) segment and a down chirp (down chirp) segment.

Then, a coherent operation is performed on the up chirp segments and the down chirp segments that correspond to the local oscillator signal and the echo signal, to obtain corresponding beat frequency signals, and a time-to-frequency conversion is performed on the beat frequency signals, to obtain an up chirp frequency $f_{bu}$ of the local oscillator signal and the echo signal, and a down chirp frequency $f_{bd}$ of the local oscillator signal and the echo signal.

Then, the range to the target object and the radial velocity of the target object are calculated by using the following formulas (1) to (6).

$$f_b = \frac{f_{bu} + f_{bd}}{2} \quad (1);$$

$$f_d = \frac{f_{bd} - f_{bu}}{2} \quad (2);$$

$$\tau = \frac{f_b}{\alpha} \quad (3);$$

$$R = \frac{c\tau}{2} \quad (4);$$

$$v = \frac{f_d \lambda}{2} \quad (5);$$

and

$$\alpha = \frac{2B}{T} \quad (6).$$

Herein, $f_b$ is a beat frequency corresponding to the range to the target object, $f_d$ is a Doppler frequency corresponding to the radial velocity of the target object, $\alpha$ is a linear frequency modulation slope, $B$ is a frequency modulation bandwidth, $T$ is a frequency modulation periodicity, $\tau$ is a time of flight of the signal, $R$ is the range to the target object, c is a velocity of light, and $\lambda$ is a center wavelength of the FMCW lidar.

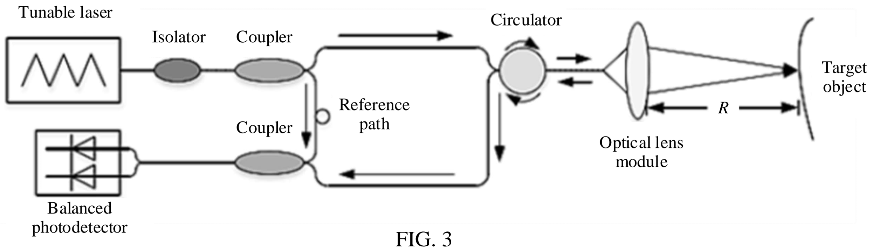

FIG. 3 is a diagram of an architecture of an FMCW lidar system.

As shown in FIG. 3, an appropriate drive current or voltage is input into a tunable laser to drive the laser to emit a laser signal. After passing through an isolator, the laser signal is split into two beams of laser signals via a beam splitter. One beam of laser signal may be used as local oscillator light, or referred to as a local oscillator signal. The other beam of laser signal successively passes through a circulator and an optical lens module, is emitted to a measured target object, and is used as measurement light, or referred to as a transmit signal.

After being reflected by a surface of the target object, the laser signal is refracted to a receive end via the optical lens module. The laser signal passes through the circulator at the receive end and is mixed with the local oscillator signal on a photosensitive surface of a BPD via a coupler, to generate a beat frequency signal that is directly proportional to a time of flight $\tau$. Frequency domain analysis is performed on the beat frequency signal, so that frequency values of up and down chirp signal parts corresponding to the beat frequency signal can be obtained. In this case, the time of flight $\tau$ and a Doppler (doppler) frequency $f_d$ can be calculated based on known parameters such as a frequency modulation periodicity and a frequency modulation bandwidth, so as to resolve a range to the target object and a radial velocity of the target object based on $\tau$ and $f_d$.

In the foregoing FMCW lidar system, the BPD is used as the receive end of the laser signal, which is referred to as BPD receiving for short below. In this scenario, when the target object is at a short range and has a high velocity, because a signal received by the BPD is presented in a form of real signal, a spectrum obtained by performing a fast Fourier transform (fast Fourier transform, FFT) on the signal is a spectrum of a double-sideband signal, and positive signs and negative signs of up and down chirp signal frequency values cannot be parsed out, it is prone to ambiguity in resolving parameters such as the range to the target object and a velocity of the target object.

The following provides detailed descriptions by using two scenarios.

First, it is assumed that a frequency sweep slope $\alpha$ of the laser is 200 MHz/$\mu$s.

Scenario (case) 1: It is assumed that the range to the target object is 75 m, and a Doppler frequency corresponding to the radial velocity of the target object is $f_{d1}$=20 MHz. In this case, a time of flight corresponding to the range is $\tau_1$=0.5 $\mu$s, and a beat frequency corresponding to the range is $f_{b1}$=100 MHz.

It can be learned from the foregoing data that, $f_{bu1}=|f_{b1}-f_{b1}|$=80 MHz, and $f_{bd1}=[f_{b1}+f_{d1}]$=120 MHz.

Scenario (case) 2: It is assumed that the range to the target object is 15 m, and a Doppler frequency corresponding to the radial velocity of the target object is $f_{d2}$=100 MHz. In this case, a time of flight corresponding to the range is $\tau_2$=0.1 $\mu$s, and a beat frequency corresponding to the range is $f_{b2}$=20 MHz.

It can be learned from the foregoing data that, $f_{bu2}=|f_{b2}-f_{d2}|$=80 MHz, and $f_{bd2}=|f_{b2}+f_{d2}|$=120 MHz.

By comparing corresponding up and down chirp frequency values that are reversely deduced in the two scenarios, it can be learned that:

$$f_{bu1}=f_{bu2}; \text{ and } f_{bd1}=f_{bd2}.$$

Signs (that are positive or negative) of up and down chirp frequencies cannot be parsed out from the real signal received by the BPD. As a result, two different combinations of {range, velocity} may correspond to same up and down chirp frequencies (actually, absolute values of the frequencies). This leads to an ambiguity problem in resolving the radial velocity of the target object and the range to the target object, in other words, a correct combination of {range, velocity} cannot be identified.

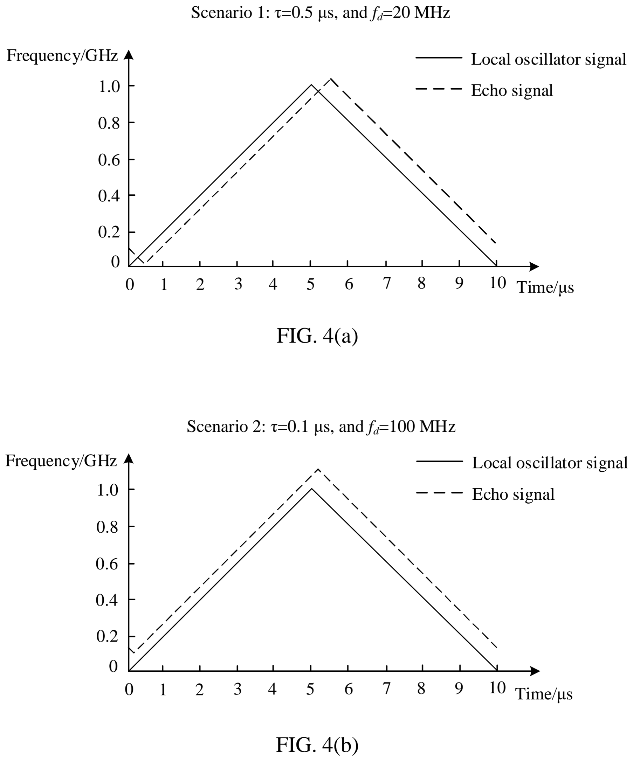

FIG. 4(a) to FIG. 4(c) are a diagram of ambiguity in resolving a radial velocity of a target object and a range to the target object.

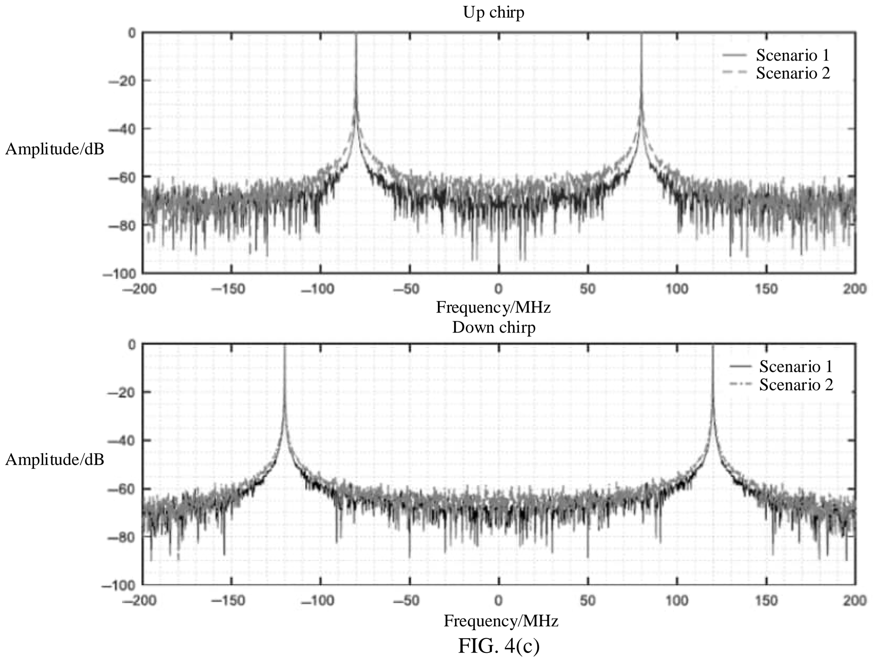

Herein, FIG. 4(a) is a diagram of waveforms of the local oscillator signal and the echo signal in the scenario 1, FIG. 4(b) is a diagram of waveforms of the local oscillator signal and the echo signal in the scenario 2, and FIG. 4(c) is a diagram of spectrums of beat frequency signals respectively corresponding to the scenario 1 and the scenario 2.

It can be learned from FIG. 4(a) and FIG. 4(b) that position relationships, in frequency domain, between the echo signal and the local oscillator signal in the two scenarios are different. However, radial velocities of the target object and ranges to the target object that are obtained through resolving based on related signal parameters collected in the scenario 1 and the scenario 2 are the same.

In addition, it can be learned from FIG. 4(c) that spectrums of beat frequency signals corresponding to the local oscillator signal and the echo signal in the two scenarios are also different. This phenomenon may also indicate the radial velocity of the target object and the range to the target object in the scenario 1 are different from the radial velocity of the target object and the range to the target object in the scenario 2. This leads to ambiguity in resolving the radial velocity of the target object and the range to the target object.

However, the ambiguity problem in measuring the radial velocity of the target object and the range to the target object in the foregoing scenario may be resolved in the following manner.

For example, a waveform of the transmitted signal may be changed from a triangular wave to a trapezoidal wave.

To be specific, a signal with a fixed frequency is added on the basis of the triangular wave, to resolve the radial velocity of the target object and the range to the target object.

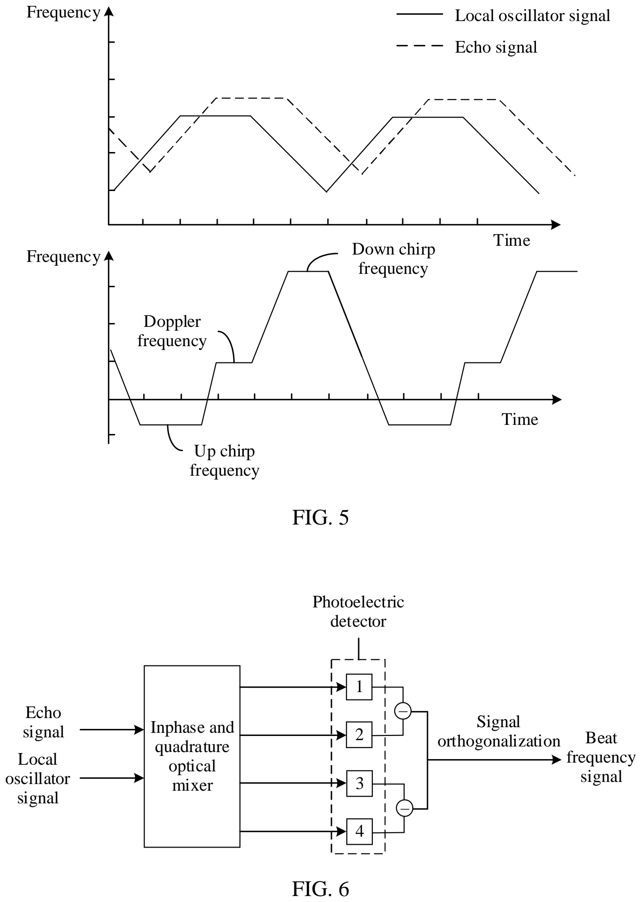

FIG. 5 is a diagram of another principle of ranging and velocity measurement based on an FMCW lidar.

It can be learned from FIG. 5 that, after a waveform of a local oscillator signal is changed from a standard triangular wave to a triangular wave (trapezoidal wave) with a part of a signal with a fixed frequency, frequency mixing is performed on the local oscillator signal and an echo signal, to obtain a group of time-frequency curves of a beat frequency signal. The curve may represent an up chirp frequency, or may represent a down chirp frequency, or may represent a Doppler frequency corresponding to a radial velocity of a target object. Based on these signal parameters, the radial velocity of the target object and a range to the target object can be accurately resolved.

However, if a frequency modulation periodicity remains unchanged, to ensure that the radial velocity of the target object can be accurately resolved by using a signal with a fixed frequency, accumulation time for the signal is generally required to be as long as possible. As a result, shortened accumulation time of the triangular wave used for ranging leads to a loss in a signal-to-noise ratio, thereby affecting ranging performance of a system. On the contrary, if triangular wave modulation duration remains unchanged, and a signal with a fixed frequency is added based on the triangular wave modulation duration, an entire frequency modulation periodicity of the signal becomes longer, thereby affecting a point rate of the system. In addition, if a frequency modulation periodicity of the fixed frequency band is excessively short, a beat frequency signal is easily affected by factors such as phase noise, and a frequency corresponding to the beat frequency signal is not an ideal single frequency. This reduces precision of resolving the radial velocity of the target object. In addition, the method is difficult to be applied to different detection scenarios, and robustness and applicability of the method are poor.

It can be learned from the foregoing description that a problem of ambiguity in ranging and velocity measurement based on the FMCW lidar is caused because all echo signals at the receive end BPD are presented as real signals. Based on this, the problem of ambiguity in ranging and velocity measurement based on the FMCW lidar may be further resolved in the following manner.

FIG. 6 is a diagram of ranging and velocity measurement by an FMCW lidar in which a receive end is an inphase and quadrature receiver.

An echo signal is received by an inphase and quadrature (inphase and quadrature, IQ) optical mixer, which is referred to as IQ receiving for short below. The received signal includes strictly orthogonal I and Q signals. The I signal and the Q signal are respectively used as a real part and an imaginary part to form a complex signal. An FFT is performed on the complex signal, so that there may be a signal only in a positive frequency direction or a negative frequency direction. Based on this, positive and negative signs of up and down chirp frequencies corresponding to a beat frequency signal can be correctly identified, to resolve a problem of ambiguity in measuring a radial velocity of a target object and a range to the target object.

However, compared with BPD receiving, IQ receiving increases complexity and manufacturing costs of a lidar system, and further increases a noise level at a receive end of the lidar system, thereby affecting detection performance of the system. In addition, IQ receiving may further cause an IQ imbalance problem. To be specific, if signals processed by IQ receiving are not strictly orthogonal to each other, an obtained beat frequency signal is still a double-sideband signal, making it impossible to parse a frequency symbol. Consequently, a problem of ambiguity in measuring the radial velocity of the target object and the range to the target object cannot be resolved either. In addition, the method is difficult to be applied to different detection scenarios, and robustness and applicability of the method are poor.

In view of this, embodiments of this application provide a signal processing method and apparatus, and a system, to process and analyze a part of a local oscillator signal and an echo signal (echo signal) at a turn point, to obtain accurate up and down chirp frequencies of the local oscillator signal and the echo signal. In this way, it is ensured that no ambiguity exists in measuring the radial velocity of the target object and the range to the target object. In addition, the method is applicable to different detection scenarios, and robustness and applicability of the method are strong.

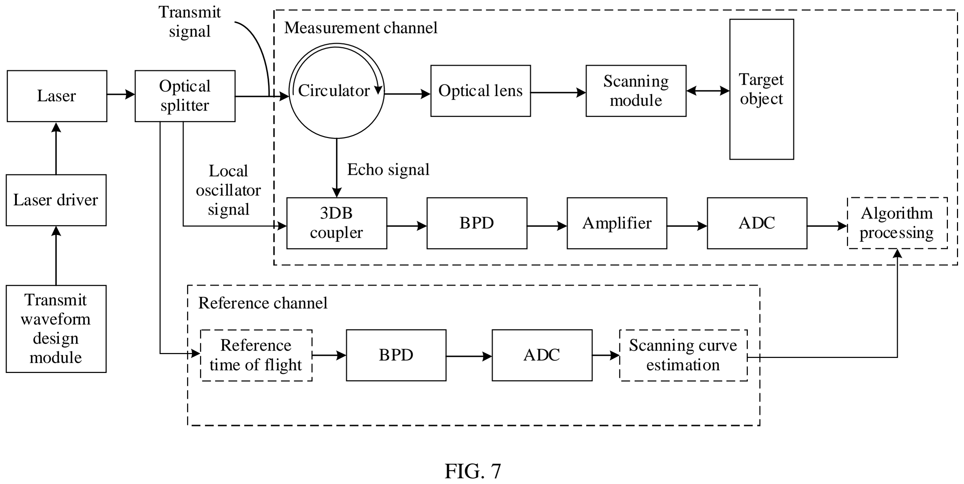

FIG. 7 is a diagram of an architecture of an FMCW lidar system according to an embodiment of this application.

In some possible embodiments, the FMCW lidar system may include the following modules.

A transmitting module is configured to generate a laser signal to be transmitted outward, and includes a laser driver, a laser, an optical amplifier, and the like.

In some possible embodiments, the transmitting module may further include a transmit waveform control module. The module is mainly configured to control a drive voltage or current of the laser, so that a waveform generated by the laser is controllable.

An optical module is configured to: transmit a signal and receive an echo signal, and includes a circulator, a collimator, an optical lens, and the like.

A scanning module is configured to emit a transmit signal at a specified angle, and includes a rotary optical scanning mirror, a pendulum, a maser, and the like.

A signal detection module is configured to detect an echo signal, and includes a detector, an analog to digital converter (analog to digital converter, ADC), an amplifier circuit, and the like. A manner in which the detector detects the echo signal includes but is not limited to single-photodiode detection, balanced photodetection, IQ detection, and polarization diversity reception.

A signal processing module includes a signal processing algorithm at a receive end, a transmit waveform control algorithm at a transmit end, and the like.

In some possible embodiments, the FMCW lidar system may further include an optical splitter, configured to: separately transmit a laser signal generated by the laser to different channels, for example, transmit the laser signal to a measurement channel as a transmit signal for transmission to a target object; transmit the laser signal to the measurement channel as a local oscillator signal for algorithm processing with a subsequently received echo signal; and transmit the laser signal to a reference channel as a local oscillator signal for corresponding algorithm processing by using a further processed laser signal as a signal reference of the measurement channel, to finally obtain a radial velocity of the target object and a range to the target object.

Based on the foregoing FMCW lidar system, this application provides a signal processing method. The method is specifically described as follows.

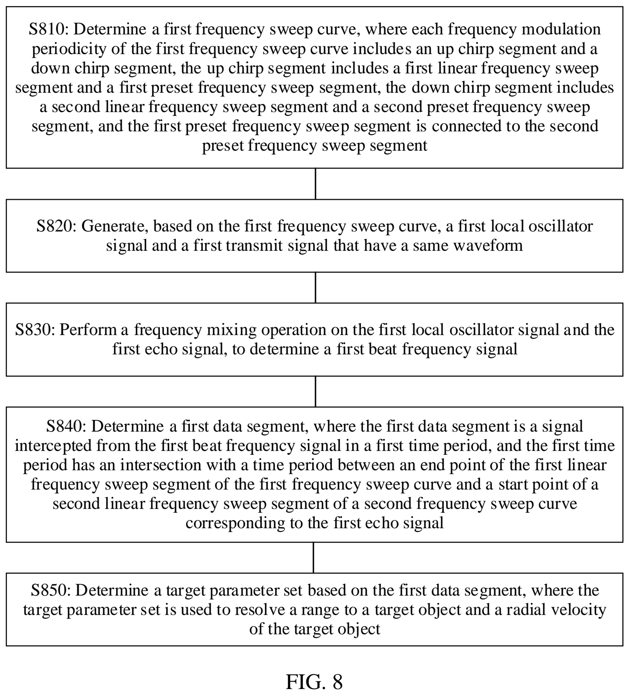

FIG. 8 shows a signal processing method according to an embodiment of this application.

In some possible embodiments, the signal processing method provided in this embodiment of this application is applied to a frequency mixing lidar, a millimeter-wave radar, or the like that can simultaneously perform ranging and velocity measurement. Applicable scenarios include intelligent driving, security surveillance, smart agriculture, and the like.

S810: Determine a first frequency sweep curve, where a first frequency modulation periodicity of the first frequency sweep curve includes an up chirp segment and a down chirp segment. The up chirp segment includes a first linear frequency sweep segment and a first preset frequency sweep segment. The down chirp segment includes a second linear frequency sweep segment and a second preset frequency sweep segment, and the first preset frequency sweep segment is connected to the second preset frequency sweep segment.

It should be understood that the first frequency sweep curve indicates a time-varying change trend of an instantaneous frequency of a signal.

In some possible embodiments, the first frequency modulation periodicity is a specified complete frequency modulation periodicity in at least one frequency modulation periodicity included in the first frequency sweep curve, for example, a $1^{st}$ complete frequency modulation periodicity in the first frequency sweep curve. A specific complete frequency modulation periodicity that is in the first frequency sweep curve and that is the first frequency modulation periodicity is not limited in embodiments of this application.

It should be understood that a second frequency sweep curve corresponding to a first echo signal also correspondingly includes the first frequency modulation periodicity. For example, if the first frequency modulation periodicity of the first frequency sweep curve is the $1^{st}$ complete frequency modulation periodicity of the first frequency sweep curve, the first frequency modulation periodicity of the second frequency sweep curve is a $1^{st}$ complete frequency modulation periodicity of the second frequency sweep curve.

In some possible embodiments, the first preset frequency sweep segment or the second preset frequency sweep segment may specifically include a linear frequency sweep segment and/or a non-linear frequency sweep segment.

In some possible embodiments, a waveform of the first preset frequency sweep segment and a waveform of the second preset frequency sweep segment each include a rectangular wave, a sine wave, or a sawtooth wave, or may be a waveform of any curve. In addition, waveform duration and a corresponding signal power are controllable. To be specific, control may be performed through the transmit waveform control module provided in the foregoing embodiment.

S820: Generate, based on the first frequency sweep curve, a first local oscillator signal and a first transmit signal that have a same waveform.

It can be learned from the description of the foregoing embodiment that the first local oscillator signal and the first transmit signal are the same, and have a same signal waveform and a same related characteristic. Therefore, the first frequency sweep curve may indicate a time-varying change trend of an instantaneous frequency of the first local oscillator signal or the first transmit signal.

S830: Perform a frequency mixing operation on the first local oscillator signal and the first echo signal, to determine a first beat frequency signal.

It should be understood that the first echo signal is a signal obtained by reflecting the first transmit signal off a target object.

S840: Determine a first data segment, where the first data segment is a signal intercepted from the first beat frequency signal in a first time period, and the first time period has an intersection with a time period between an end point of the first linear frequency sweep segment of the first frequency sweep curve and a start point of a second linear frequency sweep segment of a second frequency sweep curve corresponding to the first echo signal.

It should be understood that, similar to the first frequency sweep curve, the second frequency sweep curve may indicate a time-varying change trend of an instantaneous frequency of the first echo signal.

S850: Determine a target parameter set based on the first data segment, where the target parameter set is used to resolve a range to the target object and a radial velocity of the target object.

In some possible embodiments, the target parameter set is selected from a candidate parameter set, the candidate parameter set includes N parameter sets, and N is an integer greater than 1. The parameter set may include a plurality of parameters, for example, an up chirp frequency $f_{bu}$ and a down chirp frequency $f_{bd}$, or a time of flight $\tau$ and a Doppler frequency $f_d$ that are further determined based on the up chirp frequency and the down chirp frequency.

Based on the foregoing technical solution, during actual application, data at up-down chirp turn points of the local oscillator signal and the echo signal is not used for velocity and range estimation. Therefore, special waveform design is performed on a signal in the time period, and processing is performed based on the signal in the time period, to resolve the radial velocity of the target object and the range to the target object. This can not only ensure that a point rate of the system is not affected, but also can improve robustness and applicability of signal processing. In addition, a hardware structure of the system is slightly changed.

In some possible embodiments, this embodiment of this application further provides three signal processing methods for determining the target parameter set based on the first data segment. The target range and the radial velocity that are obtained through resolving based on the target parameter set can avoid ambiguity in resolving. In addition, because each periodicity of the first frequency sweep curve can include a non-linear frequency sweep segment, the three signal processing methods have strong robustness, and can be applied to various special scenarios. Certainly, when the first frequency sweep curve is a common triangular wave, in other words, when each periodicity of the first frequency sweep curve does not include a non-linear frequency sweep segment, the target parameter set may alternatively be determined by using the following three signal processing methods.

In some possible embodiments, when the first frequency sweep curve is a common triangular wave, it may be considered that the first preset frequency sweep segment and the second preset frequency sweep segment that are included in the first frequency sweep curve are linear, a slope of the first preset frequency sweep segment is the same as that of the first linear frequency sweep segment, and leakage of the second preset frequency sweep segment is the same as that of the second linear frequency sweep segment.

Therefore, for ease of description, the following uses an example in which the first frequency sweep curve is a common triangular wave for description. S850 may be specifically implemented by using the following three methods.

Method 1: Feature identification is performed by using a spectrum corresponding to the first data segment, to resolve a velocity and range ambiguity problem in the foregoing BPD-based receiving manner.

In some possible embodiments, when the first frequency sweep curve is a common triangular wave, the first time period has an intersection with a time period between up-down chirp turn points separately corresponding to the first local oscillator signal and the first echo signal.

The first beat frequency signal is a beat frequency signal obtained after a frequency mixing operation is performed on the first local oscillator signal and the first echo signal, the first local oscillator signal is a local oscillator signal in a measurement channel, and the first echo signal is an echo signal in the measurement channel.

It should be understood that the up-down chirp turn point corresponding to the first local oscillator signal specifically corresponds to a turn point at which a waveform in the first frequency modulation periodicity in the first frequency sweep curve changes from rising to falling, or may be a turn point at which a first frequency sweep image corresponding to the first local oscillator signal changes from rising to falling. The up-down chirp turn point corresponding to the first echo signal is specifically a turn point at which a chirp signal corresponding to the first echo signal changes from rising to falling in frequency domain, or may be a turn point at which a second frequency sweep image corresponding to the first echo signal changes from rising to falling.

It should be understood that, in this embodiment of this application, a signal characteristic of a local oscillator signal is consistent with that of a transmit signal.

In some possible embodiments, before the spectrum corresponding to the first data segment is identified, whether ambiguity occurs in resolving the radial velocity of the target object and the range to the target object in the measurement channel may be determined. Specific steps are as follows.

First, a corresponding up chirp frequency $f_{bu}$ is determined based on an up chirp segment of the first beat frequency signal, and a corresponding down chirp frequency $f_{bd}$ is determined based on a down chirp segment of the first beat frequency signal. Based on the up chirp frequency $f_{bu}$ and the down chirp frequency $f_{bd}$.

In some possible embodiments, a fourth beat frequency signal $S_U(t)$ may be determined based on the up chirp segment of the first beat frequency signal, and a fifth beat frequency signal $S_D(t)$ may be determined based on the down chirp segment of the first beat frequency signal.

Specifically, the fourth beat frequency signal $S_U(t)$ is obtained by performing a frequency mixing operation on the first local oscillator signal and an up chirp in the first echo signal. Similarly, the fifth beat frequency signal $S_D(t)$ is obtained by performing a frequency mixing operation on the first local oscillator signal and a down chirp in the first echo signal.

Then, a first time-to-frequency conversion is performed on $S_U(t)$ and $S_D(t)$ to obtain corresponding spectrums $S_U(f)$ and $S_D(f)$.

In some possible embodiments, the first time-to-frequency conversion includes but is not limited to an FFT.

Then, signal detection is separately performed on the spectrums $S_U(f)$ and $S_D(f)$, to determine the up chirp frequency $f_{bu}$ and the down chirp frequency $f_{bd}$ that correspond to the first beat frequency signal.

Finally, a Doppler frequency $f_{d\_max}$ corresponding to a maximum velocity that can be measured by a lidar system is determined, $f_{bu}$ is compared with $f_{d\_max}$, and it is determined, based on a comparison result, whether ambiguity occurs in a system resolving result. The following provides a specific comparison manner.

If $f_{bu} > f_{d\_max}$, no ambiguity occurs in the system resolving result.

If $f_{bu} \leq f_{d\_max}$, ambiguity may occur in the system resolving result, and there are two parameter combination forms for a beat frequency $f_b$ corresponding to the range and a Doppler frequency $f_d$ corresponding to the radial velocity, which may be denoted as $\{f_{b1}, f_{d1}\}$ and $\{f_{b2}, f_{d2}\}$. Specific parameters of the two parameter combinations may be determined by using the following formula:

$$f_{b1} = (f_{bu} + f_{bd})/2, f_{d1} = (f_{bd} - f_{bu})/2;$$

and

$$f_{b2} = (f_{bd} - f_{bu})/2, f_{d2} = (f_{bu} + f_{bd})/2.$$

In some possible embodiments, $\{f_{b1}, f_{d1}\}$ and $\{f_{b2}, f_{d2}\}$ may be referred to as a candidate parameter set, where $\{f_{b1}, f_{d1}\}$ is referred to as a first parameter set, and $\{f_{b2}, f_{d2}\}$ is referred to as a second parameter set.

After the foregoing signal processing, the target parameter set may be selected from the candidate parameter set by using the following method.

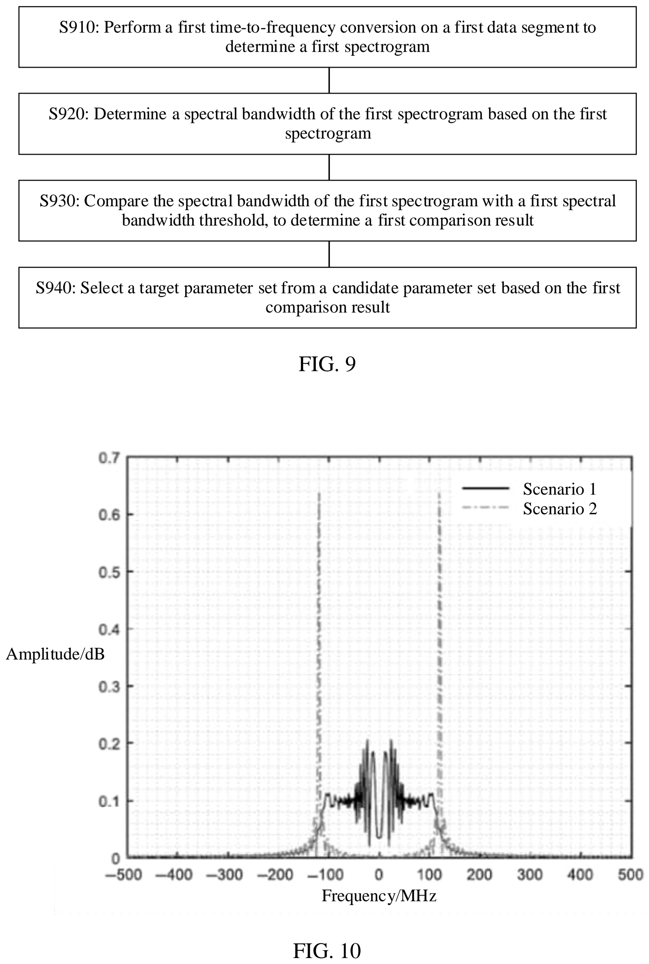

FIG. 9 shows another signal processing method according to an embodiment of this application.

S910: Perform a first time-to-frequency conversion on the first data segment to determine a first spectrogram.

In some possible embodiments, the first time-to-frequency conversion includes but is not limited to an FFT. The first spectrogram may be a spectrum, that is, the first spectrogram indicates a relationship between an amplitude and a frequency of the first data segment.

S920: Determine a spectral bandwidth of the first spectrogram based on the first spectrogram.

In some possible embodiments, the spectral bandwidth of the first spectrogram may be a half-height spectral width of a spectrum, or may be a spectral width that is of a spectrum and that corresponds to a user-defined amplitude threshold. The user-defined amplitude threshold may be a preset proper threshold.

S930: Compare the spectral bandwidth of the first spectrogram with a first spectral bandwidth threshold, to determine a comparison result.

In some possible embodiments, the first spectral bandwidth threshold is determined through a pre-experiment, and there is a mapping relationship between the first spectral bandwidth threshold and $f_b$ and $f_d$.

S940: Select a target parameter set from the candidate parameter set based on the comparison result.

In some possible embodiments, for ease of description, the spectral bandwidth of the first spectrogram may be denoted as $\omega_{seg}$, and the first spectral bandwidth threshold may be denoted as $T_\omega$. The target parameter set may be selected in the following manner.

If $\omega_{seg} < T_\omega$, the second parameter set is selected as the target parameter set.

If $\omega_{seg} \geq T_\omega$, the first parameter set is selected as the target parameter set.

FIG. 10 is a diagram of spectrums respectively corresponding to the first parameter set and the second parameter set according to an embodiment of this application.

As shown FIG. 10, if the second parameter set is selected as the target parameter set, it can indicate that the first spectrogram corresponds to an approximately single-frequency signal, and a spectral bandwidth of the first spectrogram is narrow. If the first parameter set is selected as the target parameter set, it can indicate that the first spectrogram corresponds to a multi-frequency signal, and a spectral bandwidth of the first spectrogram is wide.

In some possible embodiments, a radial velocity of a target object and a range to the target object are resolved based on the target parameter set. Specifically, on the premise that the target parameter set is known, the radial velocity of the target object and the range to the target object may be obtained through resolving based on the foregoing formulas (3) to (6).

Based on the foregoing technical solution, the first spectral bandwidth threshold determined through an experiment is compared with the spectral bandwidth of the first spectrogram, so that accurate frequency values corresponding to up and down chirps of received and transmitted signals can be determined, to select an accurate parameter set to resolve the radial velocity of the target object and the range to the target object. This avoids a problem of ambiguity in measuring the radial velocity of the target object and the range to the target object in a BPD-based receiving manner. System performance is further ensured without increasing system complexity.

Method 2: A waveform feature of a local oscillator signal in a reference channel and an estimated corresponding frequency sweep curve are used as a reference template, and feature comparison is performed between the reference template and waveform features of a local oscillator signal and an echo signal in a measurement channel, to resolve a velocity and range ambiguity problem in the foregoing BPD-based receiving manner.

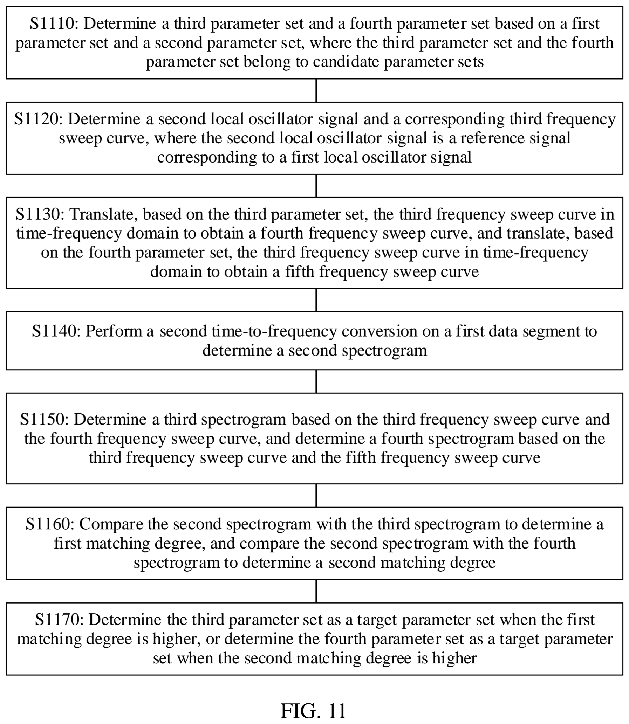

FIG. 11 shows another signal processing method according to an embodiment of this application.

In some possible embodiments, before the signal processing procedure in the method 2 is performed, whether ambiguity occurs in resolving a radial velocity of a target object and a range to the target object in a measurement channel may be determined. For specific steps, refer to the embodiment corresponding to the foregoing method 1.

S1110: Determine a third parameter set based on the first parameter set, and determine a fourth parameter set based on the second parameter set, where the third parameter set and the fourth parameter set belong to the candidate parameter sets.

In some possible embodiments, the third parameter set includes a time of flight $\tau_1$ and a Doppler frequency $f_{d1}$, and may be denoted as $\{\tau_1, f_{d1}\}$. The time of flight $\tau_1$ may be determined by using the foregoing formula (3). The fourth parameter set includes a time of flight $\tau_2$ and a Doppler frequency $f_{d2}$, and may be denoted as $\{\tau_2, f_{d2}\}$. The time of flight $\tau_2$ may also be determined by using the foregoing formula (3).

S1120: Determine a second local oscillator signal and a corresponding third frequency sweep curve, where the second local oscillator signal is a reference signal corresponding to the first local oscillator signal.

In some possible embodiments, the second local oscillator signal is a local oscillator signal in a reference channel, and the second local oscillator signal and the first local oscillator signal are from a same light source. Therefore, a signal characteristic and a waveform of the second local oscillator signal are the same as those of the first local oscillator signal, and the third frequency sweep curve may reuse the first frequency sweep curve.

S1130: Translate, based on the third parameter set, the third frequency sweep curve in time-frequency domain to obtain a fourth frequency sweep curve, and translate, based on the fourth parameter set, the third frequency sweep curve in time-frequency domain to obtain a fifth frequency sweep curve.

It should be understood that, in a time-frequency domain coordinate system, time is a horizontal axis, and frequency is a vertical axis.

In some possible embodiments, a method for determining the third frequency sweep curve, the fourth frequency sweep curve, and the fifth frequency sweep curve includes but is not limited to a Hilbert (Hilbert) transform, direct arctangent, a wavelet transform, and the like.

In some possible embodiments, $\tau_1$ in the third parameter set corresponds to a step size of translation of the third frequency sweep curve in time domain, and $f_{d1}$ in the third parameter set corresponds to a step size of translation of the third frequency sweep curve in frequency domain. Similarly, $\tau_2$ in the fourth parameter set corresponds to a step size of translation of the third frequency sweep curve in time domain, and $f_{d2}$ in the fourth parameter set corresponds to a step size of translation of the third frequency sweep curve in frequency domain.

S1140: Perform a second time-to-frequency conversion on the first data segment to determine a second spectrogram.

In some possible embodiments, the second time-to-frequency conversion includes but is not limited to a short-time Fourier transform (short-time fourier transform, STFT), a wavelet transform, or the like. The second spectrogram may be a time-frequency spectrum, and the second spectrogram indicates a time-varying relationship of a frequency difference between the first frequency sweep curve and the second frequency sweep curve in the first time period.

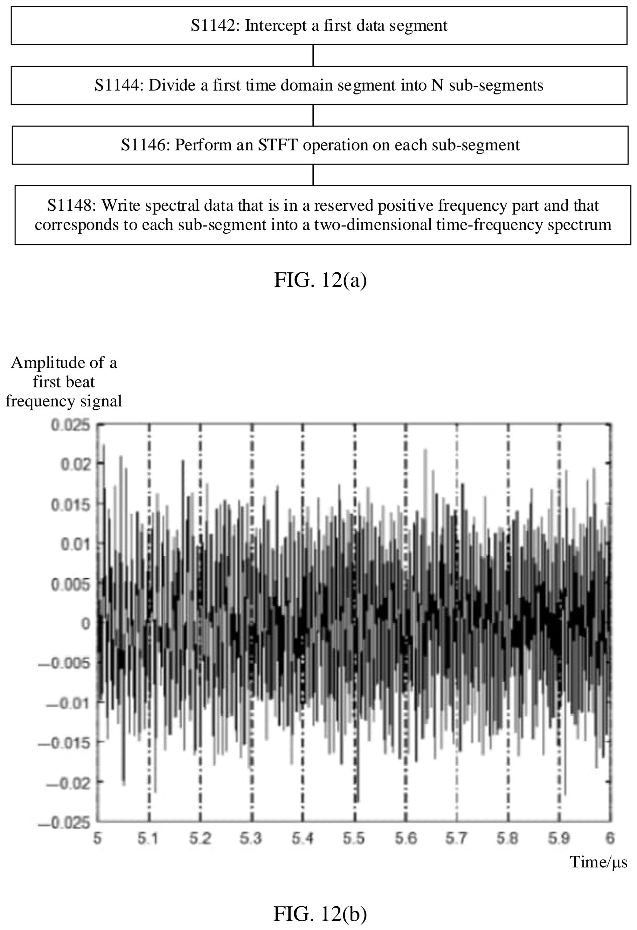

FIG. 12(a) to FIG. 12(d) are a diagram of a time-to-frequency conversion method for a first data segment according to an embodiment of this application.

Herein, FIG. 12(a) shows a flowchart of the time-to-frequency conversion method for the first data segment.

S 1142: Intercept the first data segment. It is assumed that the first time period is a signal of a 5-6 $\mu$s part of a first beat frequency signal obtained after ADC sampling is performed in the measurement channel, and the signal of the part is the first data segment.

S1144: Divide the first data segment into N sub-segments. N is a positive integer.

Herein, FIG. 12(b) shows a diagram of dividing the first data segment.

For example, a frequency of the first beat frequency signal is 100 MHz. In this case, to equally divide the first data segment with a length of 1 $\mu$s, the first data segment may be divided into 10 sub-segments, and duration corresponding to each sub-segment may be referred to as one slot (slot). In this example, each sub-segment includes 200 frequency bins.

S1146: Perform an STFT operation on each sub-segment.

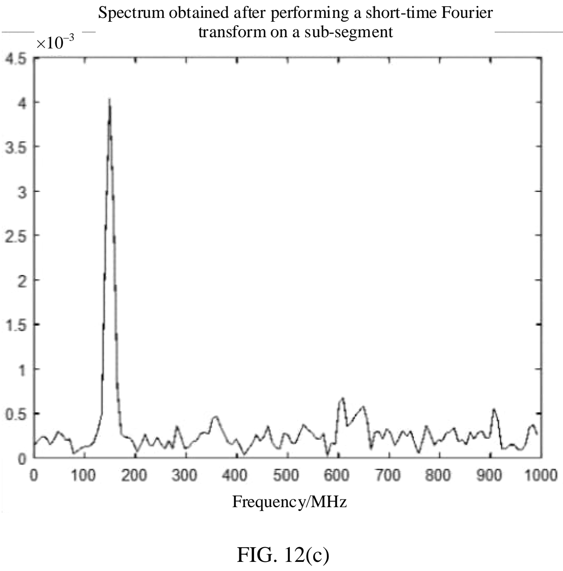

Herein, FIG. 12(c) shows a diagram of performing an STFT operation on a sub-segment.

For example, the FFT operation may be performed for 256 frequency bins in each sub-segment, and only a spectrum of a positive frequency part is reserved. It should be understood that the FFT operation for each sub-segment herein is to transform 256 frequency bins. This is because only $2^n$ frequency bins can be transformed in the FFT operation, and the 256 frequency bins are closest to 200 frequency bins. Therefore, the 256 frequency bins are transformed herein.

However, it can be learned from the foregoing description that each sub-segment includes 200 frequency bins. In this case, for remaining 56 frequency bins, a data sequence of 200 bins may be padded with zeros to obtain a data sequence with a length of 256, to ensure that a subsequent FFT operation can be performed.

In some possible embodiments, in the foregoing sub-segment division process, each slot may alternatively be set to 256 frequency bins. In this way, during the subsequent FFT operation, a frequency bin correction operation does not need to be performed on a sub-segment other than a sub-segment corresponding to a last slot.

S1148: Write spectral data that is in a reserved positive frequency part and that corresponds to each sub-segment into a two-dimensional time-frequency spectrum, where the spectral data may be specifically written into a column corresponding to a slot in the two-dimensional time-frequency spectrum, and the two-dimensional time-frequency spectrum belongs to the second spectrogram.

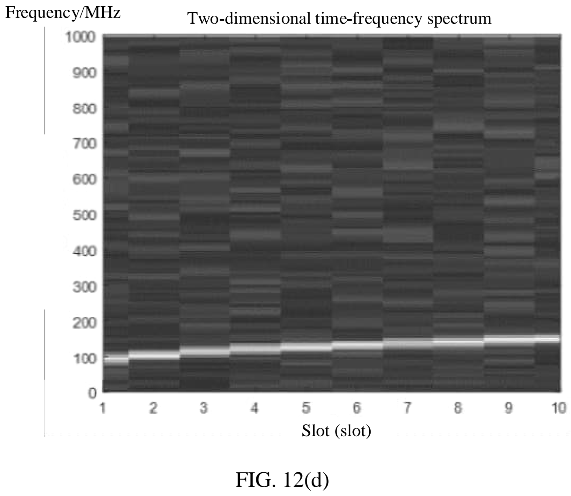

Herein, FIG. 12(d) shows a diagram of a two-dimensional time-frequency spectrum.

It should be understood that, in the foregoing two-dimensional time-frequency spectrum, a deeper color indicates lower signal energy of a corresponding frequency band, and a lighter color indicates higher signal energy of a corresponding frequency band. For example, as shown in FIG. 12(d), it can be learned that in a $1^{st}$ slot, a part with high signal energy of the sub-segment is in a frequency band near 100 MHz. For the entire two-dimensional time-frequency spectrum, there is a "frequency band" in the two-dimensional time-frequency spectrum, and the frequency band is in a range of 100 MHz to 200 MHz. This result is mutually supportive to that in FIG. 12(c).

S1150: Determine a third spectrogram based on the third frequency sweep curve and the fourth frequency sweep curve, and determine a fourth spectrogram based on the third frequency sweep curve and the fifth frequency sweep curve.

The third spectrogram indicates a time-varying relationship of a frequency difference between the third frequency sweep curve and the fourth frequency sweep curve in a second time period. The second time period has an intersection with a time period between an up-down chirp turn point of the third frequency sweep curve and an up-down chirp turn point of the fourth frequency sweep curve. The fourth spectrogram indicates a time-varying relationship of a frequency difference between the third frequency sweep curve and the fifth frequency sweep curve in a third time period, and the third time period has an intersection between a time period between the up-down chirp turn point of the third frequency sweep curve and an up-down chirp turn point of the fifth frequency sweep curve.

Certainly, when a first frequency modulation periodicity of the first frequency sweep curve includes a non-linear frequency sweep segment including the first preset frequency sweep segment and/or the second preset frequency sweep segment, first frequency modulation periodicities of the third frequency sweep curve and the fourth frequency sweep curve each also include a non-linear frequency sweep segment. Based on this, the second time period corresponds to a time period between an end point of an up chirp segment of the third frequency sweep curve and a start point of a down chirp segment of the fourth frequency sweep curve. The third time period corresponds to a time period between the end point of the up chirp segment of the third frequency sweep curve and a start point of a down chirp segment of the fifth frequency sweep curve.

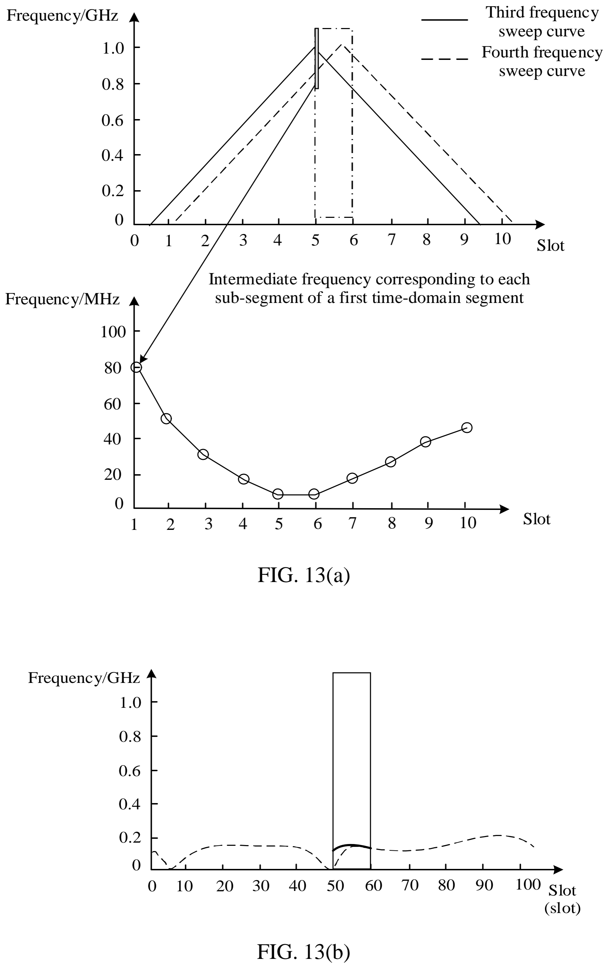

FIG. 13(a) to FIG. 13(c) are a diagram of separately comparing the third spectrogram and the fourth spectrogram with the second spectrogram according to an embodiment of this application.

Herein, FIG. 13(a) is a diagram of a frequency difference between the third frequency sweep curve and the fourth frequency sweep curve. Because the diagram of frequency difference between the third frequency sweep curve and the fourth frequency sweep curve is similar to the diagram of the frequency difference between the third frequency sweep curve and the fifth frequency sweep curve, details are not described herein again.

S1160: Compare the second spectrogram with the third spectrogram to determine a first matching degree, and compare the second spectrogram with the fourth spectrogram to determine a second matching degree.

It should be understood that a higher similarity between spectrograms indicates a higher matching degree determined by comparing the spectrograms.

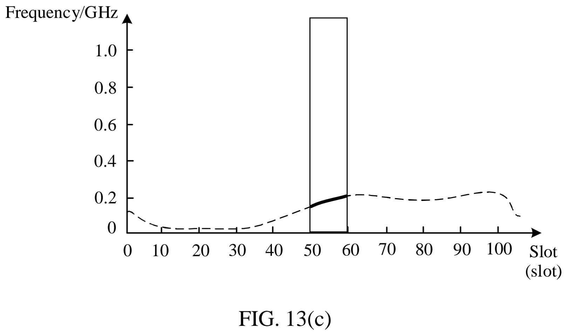

Herein, FIG. 13(b) is a diagram of comparison between the third spectrum and the second spectrum. Herein, FIG. 13(c) is a diagram of comparison between the fourth spectrum and the second spectrum. It should be understood that, similar to the second spectrogram in this embodiment, the third spectrogram and the fourth spectrogram are also time-frequency spectrums.

S1170: Determine the third parameter set as a target parameter set when the first matching degree is higher, or determine the fourth parameter set as a target parameter set when the second matching degree is higher.

In some possible embodiments, a parameter set corresponding to a spectrogram with a high matching degree may be used as the target parameter set.

For example, for the comparison result, refer to FIG. 13(b) and FIG. 13(c). In FIG. 13(b), a dashed line part in the time-frequency spectrum represents a first signal feature corresponding to the second spectrogram, and a solid line part in the time-frequency spectrum represents a second signal feature corresponding to the third spectrogram.

In FIG. 13(c), a dashed line part in the time-frequency spectrum represents the first signal feature corresponding to the second spectrogram, and a solid line part in the time-frequency spectrum represents a third signal feature corresponding to the fourth spectrogram.

It can be learned that a lower matching degree between the first signal feature and the second signal feature indicates a higher matching degree between the first signal feature and the third signal feature. Therefore, the second parameter set corresponding to the fourth spectrogram may be selected as the target parameter set.

In some possible embodiments, a radial velocity of a target object and a range to the target object are resolved based on the target parameter set. Specifically, on the premise that the target parameter set is known, the radial velocity of the target object and the range to the target object may be obtained through resolving based on the foregoing formulas (3) to (6).

Based on the foregoing technical solution, waveform features of a local oscillator signal and an echo signal in a reference channel are used as a reference template, and are compared with waveform features of a local oscillator signal and an echo signal in a measurement channel, to select an accurate parameter set to resolve the radial velocity of the target object and the range to the target object. This avoids a problem of ambiguity in measuring the radial velocity of the target object and the range to the target object in a BPD-based receiving manner. System performance is further ensured without increasing system complexity.

Method 3: A waveform of a beat frequency signal in a reference channel is used as a reference template, and feature comparison is performed between the beat frequency signal in the reference channel and a beat frequency signal in a measurement channel through one-dimensional matched filtering, to resolve a velocity and range ambiguity problem in the foregoing BPD-based receiving manner.

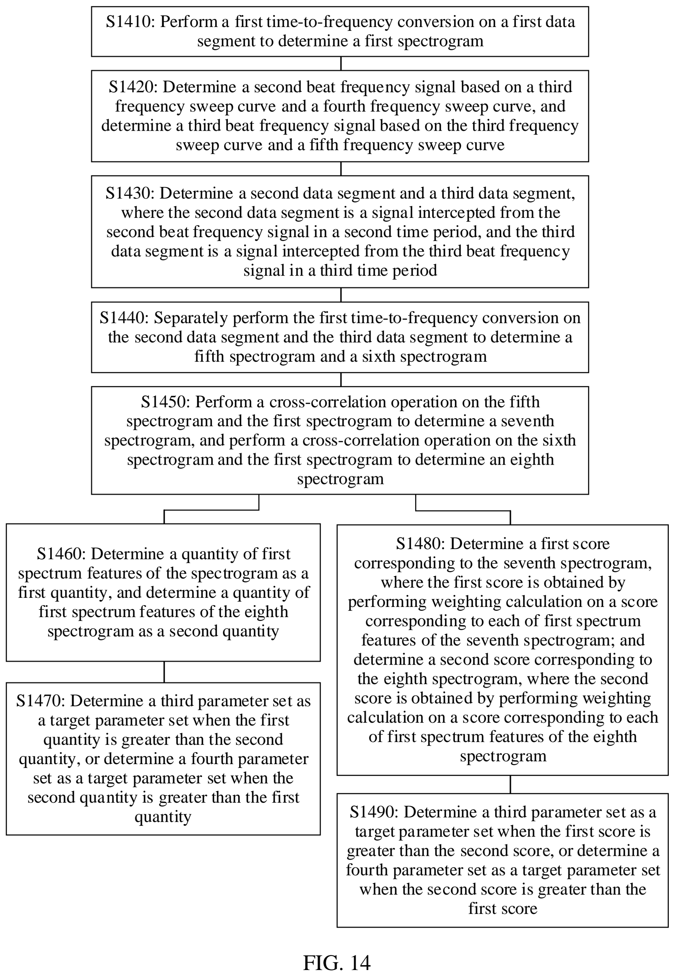

FIG. 14 shows another signal processing method according to an embodiment of this application.

In some possible embodiments, before the signal processing procedure in the method 3 is performed, whether ambiguity occurs in resolving a radial velocity of a target object and a range to the target object in a measurement channel may be determined. For specific steps, refer to the foregoing embodiment.

Before the following steps are performed, S1110 to S1130 in the method 2 need to be performed.

S1410: Perform a first time-to-frequency conversion on a first data segment to determine a first spectrogram.

S1420: Determine a second beat frequency signal based on the third frequency sweep curve and the fourth frequency sweep curve, and determine a third beat frequency signal based on the third frequency sweep curve and the fifth frequency sweep curve.

S1430: Determine a second data segment and a third data segment, where the second data segment is a signal intercepted from the second beat frequency signal in the second time period, and the third data segment is a signal intercepted from the third beat frequency signal in the third time period.

The second time period has an intersection with a time period between an up-down chirp turn point of the third frequency sweep curve and an up-down chirp turn point of the fourth frequency sweep curve. The third time period has an intersection with a time period between the up-down chirp turn point of the third frequency sweep curve and an up-down chirp turn point of the fifth frequency sweep curve.

S1440: Separately perform the first time-to-frequency conversion on the second data segment and the third data segment to determine a fifth spectrogram and a sixth spectrogram.

It should be understood that, similar to the first spectrogram, both the fifth spectrogram and the sixth spectrogram are spectrums. To be specific, the fifth spectrogram indicates a relationship between an amplitude and a frequency of the second data segment, and the sixth spectrogram indicates a relationship between an amplitude and a frequency of the third data segment.

S1450: Perform a cross-correlation operation on the fifth spectrogram and the first spectrogram to determine a seventh spectrogram, and perform a cross-correlation operation on the sixth spectrogram and the first spectrogram to determine an eighth spectrogram.

In some possible embodiments, because the spectrogram may be represented by using a spectrum function, a cross-correlation operation between the spectrograms may be a cross-correlation operation between spectrum functions corresponding to the spectrograms.

S 1460: Determine a quantity of first spectrum features of the seventh spectrogram as a first quantity, and determine a quantity of first spectrum features of the eighth spectrogram as a second quantity.

In some possible embodiments, the first spectrum feature is a waveform feature obtained after matched filtering is performed on two spectrums, and includes a maximum value existing in a spectrum, a signal-to-noise ratio of the spectrum being greater than a first threshold, a spectrum waveform symmetry, and the like. The first threshold is a preset proper threshold, for example, 60 dB.

S1470: Determine the third parameter set as a target parameter set when the first quantity is greater than the second quantity, or determine the fourth parameter set as a target parameter set when the second quantity is greater than the first quantity.

In some possible embodiments, the target parameter set may be further selected from the third parameter set and the fourth parameter set based on the following steps.

S1480: Determine a first score corresponding to the seventh spectrogram, where the first score is obtained by performing weighting calculation on a score corresponding to each of first spectrum features of the seventh spectrogram; and determine a second score corresponding to the eighth spectrogram, where the second score is obtained by performing weighting calculation on a score corresponding to each of first spectrum features of the eighth spectrogram.

S 1490: Determine the third parameter set as a target parameter set when the first score is greater than the second score, or determine the fourth parameter set as a target parameter set when the second score is greater than the first score.

In some possible embodiments, the performing the weighting calculation on the score may be performing weighing summation calculation on a score corresponding to each first spectrum feature, or may be performed in another operation manner. This is not limited in embodiments of this application.

In some possible embodiments, different first spectrum features may correspond to different scores and/or weights. For example, different maximum values respectively existing in two spectrums correspond to different weights. The first spectrum feature of a seventh spectrum is a spectrum waveform symmetry, and the first spectrum feature of an eighth spectrum is a maximum value existing in the spectrum. In this case, the spectrum waveform symmetry and the maximum value existing in the spectrum correspond to different scores.

Based on the foregoing technical solution, the cross-correlation operation is performed on the beat frequency signal in the reference channel and the beat frequency signal in the measurement channel, to select an accurate parameter set to resolve the radial velocity of the target object and the range to the target object. This avoids a problem of ambiguity in measuring the radial velocity of the target object and the range to the target object in a BPD-based receiving manner. System performance is further ensured without increasing system complexity.

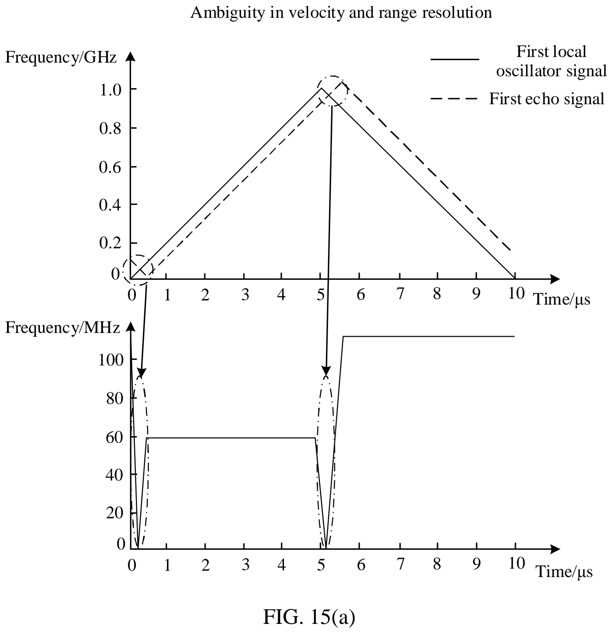

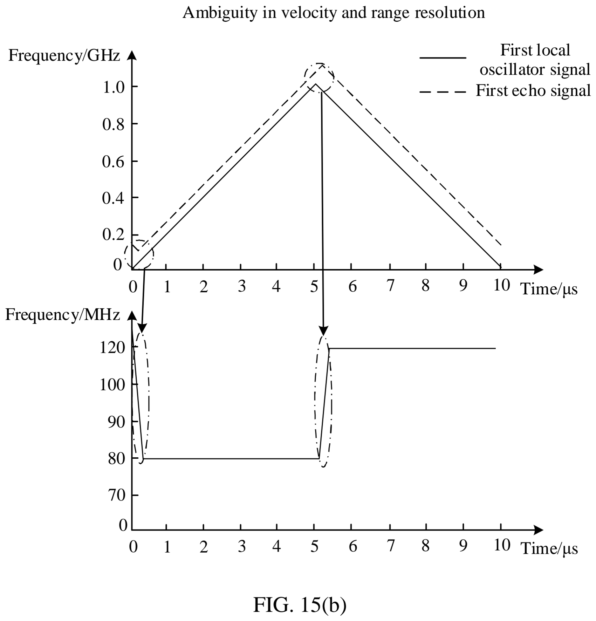

FIG. 15(a) and FIG. 15(b) are a diagram of comparison between instantaneous frequencies of a beat frequency signal according to an embodiment of this application.

Herein, FIG. 15(a) shows a spectrogram of a corresponding first beat frequency signal when there is no ambiguity problem in a radial velocity of a target object and a range to the target object that are resolved based on the beat frequency signal. It can be learned that, in this case, a curve of a part that is of the first beat frequency signal in frequency domain and that corresponds to an up-down chirp turn point in the spectrogram fluctuates greatly.

Herein, FIG. 15(b) shows a spectrogram of the corresponding first beat frequency signal when there is an ambiguity problem in the radial velocity of the target object and the range to the target object that are resolved based on the beat frequency signal. It can be learned that, in this case, a fluctuation of a curve of a part that is of the first beat frequency signal in frequency domain and that corresponds to an up-down chirp turn point in the spectrogram is smaller than that in FIG. 15(a).

In conclusion, it can be learned that, whether velocity and range ambiguity occurs or not, a difference between instantaneous frequencies of the beat frequency signal is mainly reflected at the up-down chirp turn point. Therefore, special waveform design may be performed on a signal part at a turn point of the first local oscillator signal, and then, feature matching is performed by using a corresponding feature of the segment of signal, to correctly resolve the radial velocity of the target object and the range to the target object.

In some possible embodiments, for the signal processing methods corresponding to the method 1, the method 2, and the method 3, special processing described in S810 may be further performed on the first frequency sweep curve corresponding to the first local oscillator signal in each method, to further improve robustness of the signal processing method, so that the signal processing method can be applied to various special scenarios.

It should be understood that, in consideration of impact of a time of flight, during actual application, data of a first part of the first local oscillator signal is usually not used for velocity and range estimation. Therefore, a special waveform design may be performed on the first part, to resolve the velocity and range ambiguity problem, and further improve robustness of the signal processing method. In addition, waveform duration, power, and a specific shape are all controllable, so that frequency mixing accumulation time of a signal in a non-conversion area is not affected, and a point rate of a system is not affected.

In some possible embodiments, the operation of adjusting a waveform of the first part of the first local oscillator signal may be completed through the transmit waveform control module in the foregoing embodiment. In addition, velocity and range values may be accurately resolved by using a back-end software algorithm, to reduce hardware complexity and simplify algorithm complexity.

For ease of understanding, the following uses the method 3 in combination with a special waveform design method as an example for description.

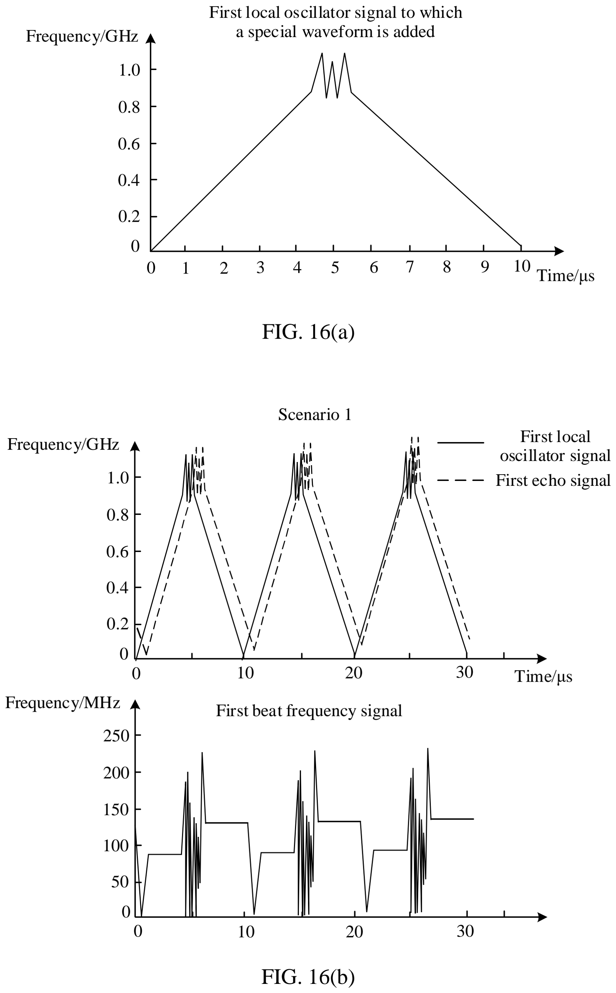

FIG. 16(a) to FIG. 16(c) are a diagram of a waveform of a first local oscillator signal with a special waveform design according to an embodiment of this application.

Herein, FIG. 16(a) shows a frequency sweep curve of the first local oscillator signal. It can be learned from FIG. 16(a) that the first local oscillator signal is a triangular wave, but a special waveform design is performed on a first part of the first local oscillator signal. To be specific, a special waveform design is performed on the signal part corresponding to duration of 0.5 $\mu$s on the left and right of a turn point of the first local oscillator signal, and the waveform is any curve waveform.

Herein, FIG. 16(b) shows frequency sweep curves of the first local oscillator signal and the first echo signal in the scenario 1. It can be learned from FIG. 16(b) that, in the foregoing FWCM lidar system, a time of flight and a Doppler frequency of the signal can be indirectly calculated based on a frequency value of a beat frequency signal separately corresponding to the first local oscillator signal and the first echo signal. The time of flight is 0.5 $\mu$s, and the time of flight may be used to resolve a range to a target object. The Doppler frequency is 20 MHz, and the Doppler frequency is used to resolve a radial velocity of the target object. A frequency sweep curve corresponding to the first part of the first local oscillator signal also presents a special waveform.

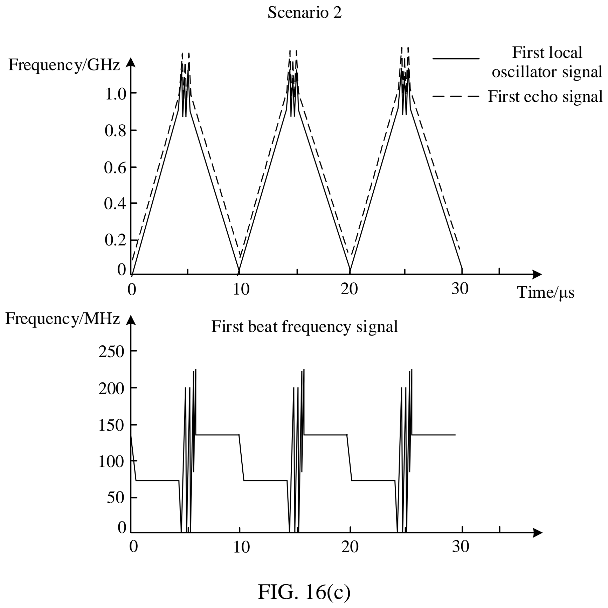

Herein, FIG. 16(c) shows frequency sweep curves of the first local oscillator signal and the first echo signal in the scenario 2. It can be learned from FIG. 16(c) that, in the foregoing FWCM lidar system, a time of flight and a Doppler frequency of the signal can be indirectly calculated based on a frequency value of a beat frequency signal separately corresponding to the first local oscillator signal and the first echo signal. The time of flight is 0.1 $\mu$s, and the time of flight may be used to resolve the range to the target object. The Doppler frequency is 100 MHz, and the Doppler frequency is used to resolve the radial velocity of the target object. A frequency sweep curve corresponding to the first part of the first local oscillator signal also presents a special waveform.

It can be learned from the description of the foregoing corresponding embodiment that, although the time of flight and the Doppler frequency in the scenario 1 are different from those in the scenario 2, it can be learned based on inverse deductions of the foregoing formula (1) and formula (2), that the frequency value $f_{bu}$ of the up chirp signal of the first beat frequency signal and the frequency value $f_{bd}$ of the down chirp signal of the first beat frequency signal are the same, and are parameter values that may be first determined by the system. Based on the group of parameter values, two parameter sets of {time of flight, Doppler frequency} are naturally resolved.

To determine accuracy of the foregoing two parameter sets, an accurate parameter set is selected to resolve the range to the target object and the radial velocity of the target object. Signal processing may be performed by using the foregoing method 1, method 2, or method 3, to determine an accurate parameter set. The following provides descriptions by using the method 3.

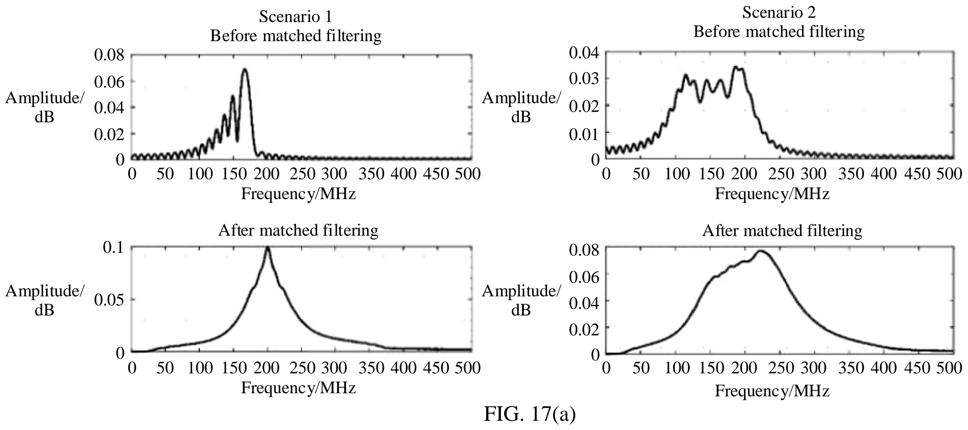

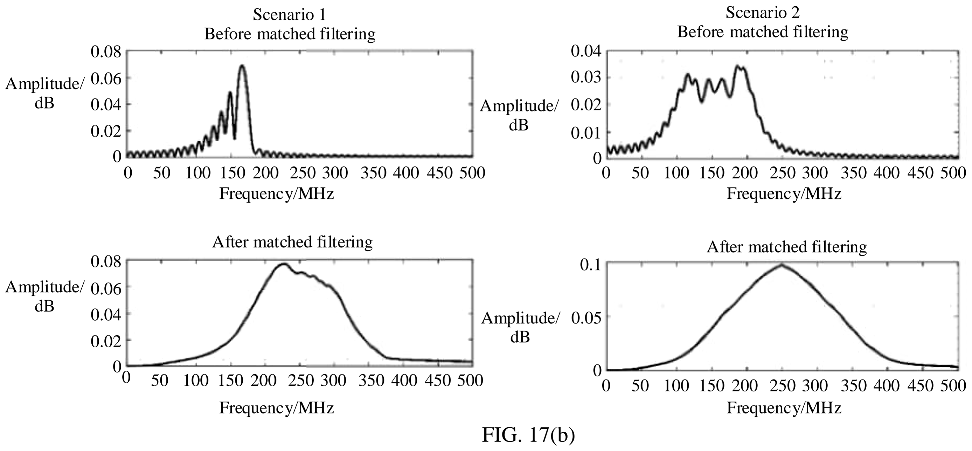

FIG. 17(a) and FIG. 17(b) are a diagram of a result of matched filtering performed based on a special waveform design according to an embodiment of this application.

Herein, FIG. 17(a) is a diagram of a third comparison result.

It can be learned from FIG. 17(a) that, after the matched filtering operation in the method 3 is separately performed on the first beat frequency signal in the scenario 1 and the first beat frequency signal in the scenario 2, it is found that the third comparison result is as follows.

Scenario 1: A waveform obtained through matched filtering is symmetric and has a peak value.

Scenario 2: A waveform obtained through matched filtering is not symmetric, but has a peak value.

It can be learned that matched filtering on the first beat frequency signal in the scenario 1 is correct.

Herein, FIG. 17(b) is a diagram of another third comparison result.

It can be learned from FIG. 17(b) that, after the matched filtering operation in the method 3 is separately performed on the first beat frequency signal in the scenario 1 and the first beat frequency signal in the scenario 2, it is found that the third comparison result is as follows:

Scenario 1: A waveform obtained through matched filtering is not symmetric, but has a peak value.

Scenario 2: A waveform obtained through matched filtering is symmetric and has a peak value.

It can be learned that matched filtering on the first beat frequency signal in the scenario 2 is correct.

Based on the foregoing technical solution, in the signal processing method provided in this embodiment of this application, a first part of a first local oscillator signal is replaced with a special waveform signal, and an accurate parameter set can be selected to resolve a radial velocity of a target object and a range to the target object. This avoids ambiguity in measuring the radial velocity of the target object and the range to the target object in a BPD-based receiving manner, and further can improve signal processing robustness, so that the signal processing method can be applied to various special scenarios.

In addition, an embodiment of this application further provides an apparatus configured to implement any one of the foregoing methods. For example, a signal processing apparatus is provided. The apparatus includes units (or means) configured to implement any one of the foregoing signal processing methods.

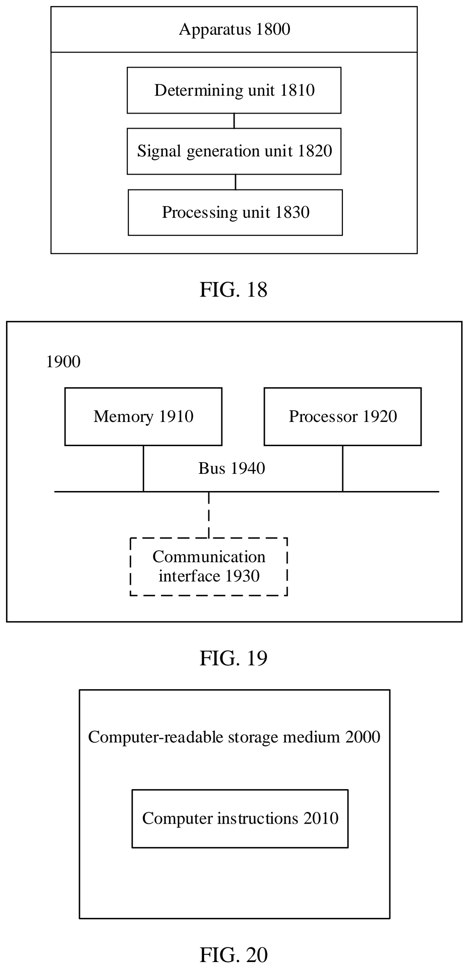

FIG. 18 is a block diagram of a signal processing apparatus 1800 according to an embodiment of this application. As shown in FIG. 18, the apparatus 1800 includes:

a determining unit 1810 configured to determine a first frequency sweep curve, where a first frequency modulation periodicity of the first frequency sweep curve includes an up chirp segment and a down chirp segment, the up chirp segment includes a first linear frequency sweep segment and a first preset frequency sweep segment, the down chirp segment includes a second linear frequency sweep segment and a second preset frequency sweep segment, and the first preset frequency sweep segment is connected to the second preset frequency sweep segment;

a signal generation unit 1820 configured to generate, based on the first frequency sweep curve, a first local oscillator signal and a first transmit signal that have a same waveform; and

a processing unit 1830 configured to: perform a frequency mixing operation on the first local oscillator signal and a first echo signal, to determine a first beat frequency signal, where the first echo signal is a signal obtained by reflecting the first transmit signal off a target object; determine a first data segment, where the first data segment is a signal intercepted from the first beat frequency signal in a first time period, and the first time period has an intersection with a time period between an end point of the first linear frequency sweep segment of the first frequency sweep curve and a start point of a second linear frequency sweep segment of a second frequency sweep curve corresponding to the first echo signal; and determine a target parameter set based on the first data segment, where the target parameter set is used to resolve a range to the target object and a radial velocity of the target object.

In some possible embodiments, a waveform of the first preset frequency sweep segment and a waveform of the second preset frequency sweep segment each include a rectangular wave, a sine wave, or a sawtooth wave.

In some possible embodiments, before the processing unit 1830 determines the target parameter set based on the first data segment, the processing unit 1830 is further configured to: determine a corresponding up chirp frequency $f_{bu}$ based on an up chirp segment of the first beat frequency signal before determining the target parameter set based on the first data segment, and determine a corresponding down chirp frequency $f_{bd}$ based on a down chirp segment of the first beat frequency signal; and determine a first parameter set and a second parameter set based on the up chirp frequency $f_{bu}$ and the down chirp frequency $f_{bd}$, where the first parameter set and the second parameter set belong to candidate parameter sets, and the target parameter set is a parameter set selected from the candidate parameter sets.

In some possible embodiments, the first parameter set includes a beat frequency $f_{b1}$ and a Doppler frequency $f_{d1}$, and the second parameter set includes a beat frequency $f_{b2}$ and a Doppler frequency $f_{d2}$.

In some possible embodiments, the processing unit is specifically configured to: perform a first time-to-frequency conversion on the first data segment to determine a first spectrogram, where the first spectrogram indicates a relationship between an amplitude and a frequency of the first data segment; determine a spectral bandwidth of the first spectrogram based on the first spectrogram; and compare the spectral bandwidth of the first spectrogram with a first spectral bandwidth threshold, and determine the first parameter set as the target parameter set when the spectral bandwidth of the first spectrum is greater than or equal to the first spectral bandwidth threshold, or determine the second parameter set as the target parameter set when the spectral bandwidth of the first spectrum is less than the first spectral bandwidth threshold, where the first spectral bandwidth threshold is determined through a pre-experiment.

In some possible embodiments, the processing unit 1830 is further configured to: determine a third parameter set based on the first parameter set, and determine a fourth parameter set based on the second parameter set, where the third parameter set and the fourth parameter set belong to the candidate parameter sets. The third parameter set includes a time of flight $\tau_1$ and a Doppler frequency $f_{d1}$, and the fourth parameter set includes a time of flight $\tau_2$ and a Doppler frequency $f_{d2}$.

In some possible embodiments, before the processing unit 1830 determines the target parameter set based on the first data segment, the processing unit 1830 is further configured to: determine a second local oscillator signal and a corresponding third frequency sweep curve, where the second local oscillator signal is a reference signal corresponding to the first local oscillator signal; determine a second local oscillator signal, and determine a third frequency sweep curve based on a signal characteristic of the second local oscillator signal, where the second local oscillator signal is a local oscillator signal in a reference channel, and the second local oscillator signal and the first local oscillator signal are from a same light source; and translate, based on the third parameter set, the third frequency sweep curve in time-frequency domain to obtain a fourth frequency sweep curve, and translate, based on the fourth parameter set, the third frequency sweep curve in time-frequency domain to obtain a fifth frequency sweep curve.

In some possible embodiments, the processing unit 1830 is specifically configured to: perform a second time-to-frequency conversion on the first data segment to determine a second spectrogram, where the second spectrogram indicates a time-varying relationship of a frequency difference between the first frequency sweep curve and the second frequency sweep curve in the first time period; determine a third spectrogram based on the third frequency sweep curve and the fourth frequency sweep curve, and determine a fourth spectrogram based on the third frequency sweep curve and the fifth frequency sweep curve, where the third spectrogram indicates a time-varying relationship of a frequency difference between the third frequency sweep curve and the fourth frequency sweep curve in a second time period, the fourth spectrogram indicates a time-varying relationship of a frequency difference between the third frequency sweep curve and the fifth frequency sweep curve in a third time period, the second time period has an intersection with a time period between an end point of a first linear frequency sweep segment of the third frequency sweep curve and a start point of a second linear frequency sweep segment of the fourth frequency sweep curve, and the third time period has an intersection with a time period between the end point of the first linear frequency sweep segment of the third frequency sweep curve and a start point of a second linear frequency sweep segment of the fifth frequency sweep curve; and compare the second spectrogram with the third spectrogram to determine a first matching degree, and compare the second spectrogram with the fourth spectrogram to determine a second matching degree; and determine the third parameter set as the target parameter set when the first matching degree is higher, or determine the fourth parameter set as the target parameter set when the second matching degree is higher.

In some possible embodiments, the second time-to-frequency conversion includes a short-time Fourier transform or a wavelet transform.

In some possible embodiments, the processing unit 1830 is specifically configured to: perform a first time-to-frequency conversion on the first data segment to determine a first spectrogram, where the first spectrogram indicates a relationship between an amplitude and a frequency of the first data segment; determine a second beat frequency signal based on the third frequency sweep curve and the fourth frequency sweep curve, and determine a third beat frequency signal based on the third frequency sweep curve and the fifth frequency sweep curve; determine a second data segment and a third data segment, where the second data segment is a signal intercepted from the second beat frequency signal in a second time period, the third data segment is a signal intercepted from the third beat frequency signal in a third time period, the second time period has an intersection with a time period between an end point of a first linear frequency sweep segment of the third frequency sweep curve and a start point of a second linear frequency sweep segment of the fourth frequency sweep curve, and the third time period has an intersection with a time period between the end point of the first linear frequency sweep segment of the third frequency sweep curve and a start point of a second linear frequency sweep segment of the fifth frequency sweep curve; separately perform the first time-to-frequency conversion on the second data segment and the third data segment, to determine a fifth spectrogram and a sixth spectrogram, where the fifth spectrogram indicates a relationship between an amplitude and a frequency of the second data segment, and the sixth spectrogram indicates a relationship between an amplitude and a frequency of the third data segment; perform a cross-correlation operation on the fifth spectrogram and the first spectrogram to determine a seventh spectrogram, and perform a cross-correlation operation on the sixth spectrogram and the first spectrogram to determine an eighth spectrogram; determine a quantity of first spectrum features of the seventh spectrogram as a first quantity, and determine a quantity of first spectrum features of the eighth spectrogram as a second quantity, where the first spectrum feature includes a maximum value existing in a spectrum, a signal-to-noise ratio of the spectrum being greater than a first threshold, or a spectrum waveform symmetry; and determine the third parameter set as the target parameter set when the first quantity is greater than the second quantity, or determine the fourth parameter set as the target parameter set when the second quantity is greater than the first quantity; or determine a first score corresponding to the seventh spectrogram, where the first score is obtained by performing weighting calculation on a score corresponding to each of the first spectrum features of the seventh spectrogram; and determine a second score corresponding to the eighth spectrogram, where the second score is obtained by performing weighting calculation on a score corresponding to each of the first spectrum features of the eighth spectrogram; and determine the third parameter set as the target parameter set when the first score is greater than the second score, or determine the fourth parameter set as the target parameter set when the second score is greater than the first score.

In some possible embodiments, the first time-to-frequency conversion includes a fast Fourier transform.

FIG. 19 is a block diagram of another signal processing apparatus 1900 according to an embodiment of this application. The signal processing apparatus 1900 shown in FIG. 19 includes a memory 1910, a processor 1920, and a bus 1940. Optionally, the computer device 1900 further includes a communication interface 1930. The memory 1910, the processor 1920, and the communication interface 1930 implement mutual communication connections through the bus 1040.

The memory 1910 may be a read only memory (read only memory, ROM), a static storage device, a dynamic storage device, or a random access memory (random access memory, RAM). The memory 1910 may store a program. When the program stored in the memory 1910 is executed by the processor 1920, the processor 1920 is configured to perform steps of a neural network model training method in embodiments of this application. Specifically, the processor 1920 may perform the methods shown in FIG. 8, FIG. 9, FIG. 11, and FIG. 14.

The processor 1920 may be a general-purpose central processing unit (central processing unit, CPU), a microprocessor, an application-specific integrated circuit (applicationspecific integrated circuit, ASIC), a graphics processing unit (graphics processing unit, GPU), or one or more integrated circuits, and is configured to execute a related program, to implement the signal processing method provided in embodiments of this application.

The processor 1920 may alternatively be an integrated circuit chip, and has a signal processing capability. In an implementation process, the steps of the signal processing method provided in embodiments in this application may be completed by using an integrated logic circuit of hardware in the processor 1920 or instructions in a software form.

The processor 1920 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or a transistor logic device, or a discrete hardware component. The processor 1920 may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. A software module may be located in a mature storage medium in the art, for example, a random access memory, a flash memory, a read-only memory, a programmable read-only memory, an electrically erasable programmable memory, or a register. The storage medium is located in the memory 1910. The processor 1920 reads information in the memory 1910, and completes, in combination with hardware of the processor 1920, functions that need to be performed by the units included in the apparatus shown in FIG. 18, or performs the methods shown in FIG. 8, FIG. 9, FIG. 11, and FIG. 14 in the method embodiments of this application.

The communication interface 1930 uses, for example, but not limited to, a transceiver-like apparatus, to implement communication between the apparatus 1900 and another device or a communication network. For example, iterative calculation data may be obtained through the communication interface 1930.

The bus 1940 may include a path for transmitting information between components (for example, the memory 1910, the processor 1920, and the communication interface 1930) of the apparatus 1900.

It should be understood that, although only the memory, the processor, and the communication interface are shown in the foregoing apparatus 1900, in a specific implementation process, a person skilled in the art should understand that the apparatus 1900 may further include another component that is necessary to implement normal running. In addition, based on a specific requirement, a person skilled in the art should understand that the apparatus 1900 may further include a hardware component for implementing another additional function. In addition, a person skilled in the art should understand that the apparatus 1900 may alternatively include only a component required for implementing embodiments of this application, and does not need to include all components shown in FIG. 19.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

FIG. 20 is a block diagram of a computer-readable storage medium 2000 according to an embodiment of this application. FIG. 20 shows the computer-readable storage medium 2000. The computer-readable storage medium 2000 stores computer instructions 2010. When the computer instructions 2010 are executed by a processor, the methods shown in FIG. 8, FIG. 9, FIG. 11, and FIG. 14 may be implemented.

In some possible embodiments, the computer-readable storage medium 2000 may be any usable medium accessible by a computer, or a data storage device, for example, a server or a data center, integrating one or more usable media. The usable medium may be a magnetic medium (for example, a floppy disk, a hard disk drive, a magnetic tape), an optical medium (for example, a DVD), or a semiconductor medium. The semiconductor medium may be a solid-state drive.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of software functional unit and sold or used as an independent product, the functions may be stored in a computer-readable storage medium. Based on such an understanding, the technical solutions of this application essentially, or the part contributing to the conventional technology, or some of the technical solutions may be implemented in a form of software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk drive, a read-only memory (Read-Only Memory, ROM), a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A signal processing method, wherein the method comprises:

    determining a first frequency sweep curve, wherein a first frequency modulation periodicity of the first frequency sweep curve comprises an up chirp segment and a down chirp segment, the up chirp segment comprises a first linear frequency sweep segment and a first preset frequency sweep segment, the down chirp segment comprises a second linear frequency sweep segment and a second preset frequency sweep segment, and the first preset frequency sweep segment is connected to the second preset frequency sweep segment;
    generating, based on the first frequency sweep curve, a first local oscillator signal and a first transmit signal that have a same waveform;
    performing a frequency mixing operation on the first local oscillator signal and a first echo signal, to determine a first beat frequency signal, wherein the first echo signal is a signal obtained by reflecting the first transmit signal off a target object;
    determining a first data segment, wherein the first data segment is a signal intercepted from the first beat frequency signal in a first time period, and
    the first time period has an intersection with a time period between an end point of the first linear frequency sweep segment of the first frequency sweep curve and a start point of a second linear frequency sweep segment of a second frequency sweep curve corresponding to the first echo signal; and
    determining a target parameter set based on the first data segment, wherein the target parameter set is used to resolve a range to the target object and a radial velocity of the target object.

2. The method according to claim 1, wherein a waveform of the first preset frequency sweep segment and a waveform of the second preset frequency sweep segment each comprise a rectangular wave, a sine wave, or a sawtooth wave.

3. The method according to claim 1 or 2, wherein before the determining the target parameter set based on the first data segment, the method further comprises:

    determining a corresponding up chirp frequency $f_{bu}$ based on an up chirp segment of the first beat frequency signal, and determining a corresponding down chirp frequency $f_{bd}$ based on a down chirp segment of the first beat frequency signal; and
    determining a first parameter set and a second parameter set based on the up chirp frequency $f_{bu}$ and the down chirp frequency $f_{bd}$, wherein the first parameter set and the second parameter set belong to candidate parameter sets, and the target parameter set is a parameter set selected from the candidate parameter sets.

4. The method according to claim 3, wherein a beat frequency $f_{b1}$ and a Doppler frequency $f_{d1}$ that are comprised in the first parameter set are separately determined by using the following formula (1):

$$f_{b1} = (f_{bu} + f_{bd})/2, f_{d1} = (f_{bd} - f_{bu})/2 \ (1);$$

and
a beat frequency $f_{b2}$ and a Doppler frequency $f_{d2}$ that are comprised in the second parameter set are separately determined by using the following formula (2):

$$f_{b2} = (f_{bd} - f_{bu})/2, f_{d2} = (f_{bu} + f_{bd})/2 \quad (2).$$

5. The method according to claim 3 or 4, wherein the determining the target parameter set based on the first data segment comprises:

performing a first time-to-frequency conversion on the first data segment to determine a first spectrogram, wherein the first spectrogram indicates a relationship between an amplitude and a frequency of the first data segment;

determining a spectral bandwidth of the first spectrogram based on the first spectrogram; and;

comparing the spectral bandwidth of the first spectrogram with a first spectral bandwidth threshold, and determining the first parameter set as the target parameter set when the spectral bandwidth of the first spectrum is greater than or equal to the first spectral bandwidth threshold, or determining the second parameter set as the target parameter set when the spectral bandwidth of the first spectrum is less than the first spectral bandwidth threshold, wherein the first spectral bandwidth threshold is determined through a pre-experiment.

6. The method according to claim 3 or 4, wherein the method further comprises:

determining a third parameter set based on the first parameter set, and determining a fourth parameter set based on the second parameter set, wherein the third parameter set and the fourth parameter set belong to the candidate parameter sets, wherein

the third parameter set comprises a time of flight $\tau_1$ and the Doppler frequency $f_{d1}$, and the time of flight $\tau_1$ is determined by using the following formula (3):

$$\tau_1 = \frac{f_{b1}}{\alpha} \quad (3);$$

and

the fourth parameter set comprises a time of flight $\tau_2$ and the Doppler frequency $f_{d2}$, and the time of flight $\tau_2$ is determined by using the following formula (4):

$$\tau_2 = \frac{f_{b2}}{\alpha} \quad (4),$$

wherein

$\alpha$ represents a frequency modulation slope of the first local oscillator signal.

7. The method according to claim 6, wherein before the determining the target parameter set based on the first data segment, the method further comprises:

determining a second local oscillator signal, and determining a third frequency sweep curve based on a signal characteristic of the second local oscillator signal, wherein the second local oscillator signal is a local oscillator signal in a reference channel, and the second local oscillator signal and the first local oscillator signal are from a same light source; and

translating, based on the third parameter set, the third frequency sweep curve in time-frequency domain to obtain a fourth frequency sweep curve, and translating, based on the fourth parameter set, the third frequency sweep curve in time-frequency domain to obtain a fifth frequency sweep curve.

8. The method according to claim 7, wherein the determining the target parameter set based on the first data segment comprises:

performing a second time-to-frequency conversion on the first data segment to determine a second spectrogram, wherein the second spectrogram indicates a time-varying relationship of a frequency difference between the first frequency sweep curve and the second frequency sweep curve in the first time period;

determining a third spectrogram based on the third frequency sweep curve and the fourth frequency sweep curve, and determining a fourth spectrogram based on the third frequency sweep curve and the fifth frequency sweep curve, wherein the third spectrogram indicates a time-varying relationship of a frequency difference between the third frequency sweep curve and the fourth frequency sweep curve in a second time period, the fourth spectrogram indicates a time-varying relationship of a frequency difference between the third frequency sweep curve and the fifth frequency sweep curve in a third time period, the second time period has an intersection with a time period between an end point of a first linear frequency sweep segment of the third frequency sweep curve and a start point of a second linear frequency sweep segment of the fourth frequency sweep curve, and the third time period has an intersection with a time period between the end point of the first linear frequency sweep segment of the third frequency sweep curve and a start point of a second linear frequency sweep segment of the fifth frequency sweep curve;

comparing the second spectrogram with the third spectrogram to determine a first matching degree, and comparing the second spectrogram with the fourth spectrogram to determine a second matching degree; and determining the third parameter set as the target parameter set when the first matching degree is higher, or determining the fourth parameter set as the target parameter set when the second matching degree is higher.

9. The method according to claim 8, wherein the second time-to-frequency conversion comprises a short-time Fourier transform or a wavelet transform.

10. The method according to claim 7, wherein the determining the target parameter set based on the first data segment comprises:

performing a first time-to-frequency conversion on the first data segment to determine a first spectrogram, wherein the first spectrogram indicates a relationship between an amplitude and a frequency of the first data segment;

determining a second beat frequency signal based on the third frequency sweep curve and the fourth frequency sweep curve, and determining a third beat frequency signal based on the third frequency sweep curve and the fifth frequency sweep curve;

determining a second data segment and a third data segment, wherein the second data segment is a signal intercepted from the second beat frequency signal in a second time period, the third data segment is a signal intercepted from the third beat frequency signal in a third time period, the second time period has an intersection with a time period between an end point of a first linear frequency sweep segment of the third frequency sweep curve and a start point of a second linear frequency sweep segment of the fourth frequency sweep curve, and the third time period has an intersection with a time period between the end point of the first linear frequency sweep segment of the third frequency sweep curve and a start point of a second linear frequency sweep segment of the fifth frequency sweep curve;

separately performing the first time-to-frequency conversion on the second data segment and the third data segment, to determine a fifth spectrogram and a sixth spectrogram, wherein the fifth spectrogram indicates a relationship between an amplitude and a frequency of the second data segment, and the sixth spectrogram indicates a relationship between an amplitude and a frequency of the third data segment;

performing a cross-correlation operation on the fifth spectrogram and the first spectrogram to determine a seventh spectrogram, and performing a cross-correlation operation on the sixth spectrogram and the first spectrogram to determine an eighth spectrogram;

determining a quantity of first spectrum features of the seventh spectrogram as a first quantity, and determining a quantity of first spectrum features of the eighth spectrogram as a second quantity, wherein the first spectrum feature comprises a maximum value existing in a spectrum, a signal-to-noise ratio of the spectrum being greater than a first threshold, or a spectrum waveform symmetry; and

determining the third parameter set as the target parameter set when the first quantity is greater than the second quantity, or determining the fourth parameter set as the target parameter set when the second quantity is greater than the first quantity; or

determining a first score corresponding to the seventh spectrogram, wherein the first score is obtained by performing weighting calculation on a score corresponding to each of the first spectrum features of the seventh spectrogram; and determining a second score corresponding to the eighth spectrogram, wherein the second score is obtained by performing weighting calculation on a score corresponding to each of the first spectrum features of the eighth spectrogram; and

determining the third parameter set as the target parameter set when the first score is greater than the second score, or determining the fourth parameter set as the target parameter set when the second score is greater than the first score.

11. The method according to claim 5 or 10, wherein the first time-to-frequency conversion comprises a fast Fourier transform.

12. A signal processing apparatus, wherein the apparatus comprises a determining unit, a signal generation unit, and a processing unit, wherein

the determining unit is configured to determine a first frequency sweep curve, wherein a first frequency modulation periodicity of the first frequency sweep curve comprises an up chirp segment and a down chirp segment, the up chirp segment comprises a first linear frequency sweep segment and a first preset frequency sweep segment, the down chirp segment comprises a second linear frequency sweep segment and a second preset frequency sweep segment, and the first preset frequency sweep segment is connected to the second preset frequency sweep segment;

the signal generation unit is configured to generate, based on the first frequency sweep curve, a first local oscillator signal and a first transmit signal that have a same waveform; and

the processing unit is configured to: perform a frequency mixing operation on the first local oscillator signal and a first echo signal, to determine a first beat frequency signal, wherein the first echo signal is a signal obtained by reflecting the first transmit signal off a target object; determine a first data segment, wherein the first data segment is a signal intercepted from the first beat frequency signal in a first time period, and the first time period has an intersection with a time period between an end point of the first linear frequency sweep segment of the first frequency sweep curve and a start point of a second linear frequency sweep segment of a second frequency sweep curve corresponding to the first echo signal; and determine a target parameter set based on the first data segment, wherein the target parameter set is used to resolve a range to the target object and a radial velocity of the target object.

13. The apparatus according to claim 12, wherein a waveform of the first preset frequency sweep segment and a waveform of the second preset frequency sweep segment each comprise a rectangular wave, a sine wave, or a sawtooth wave.

14. The apparatus according to claim 12 or 13, wherein before the processing unit determines the target parameter set based on the first data segment, the processing unit is further configured to:

determine a corresponding up chirp frequency $f_{bu}$ based on an up chirp segment of the first beat frequency signal, and determine a corresponding down chirp frequency $f_{bd}$ based on a down chirp segment of the first beat frequency signal; and

determine a first parameter set and a second parameter set based on the up chirp frequency $f_{bu}$ and the down chirp frequency $f_{bd}$, wherein the first parameter set and the second parameter set belong to candidate parameter sets, and the target parameter set is a parameter set selected from the candidate parameter sets.

15. The apparatus according to claim 14, wherein a beat frequency $f_{b1}$ and a Doppler frequency $f_{d1}$ that are comprised in the first parameter set are separately determined by using the following formula (5):

$$f_{b1} = (f_{bu} + f_{bd})/2, f_{d1} = (f_{bd} - f_{bu})/2 \ (5);$$

and
a beat frequency $f_{b2}$ and a Doppler frequency $f_{d2}$ that are comprised in the second parameter set are separately determined by using the following formula (6):

$$f_{b2} = (f_{bd} - f_{bu})/2, f_{d2} = (f_{bu} + f_{bd})/2 \ (6).$$

16. The apparatus according to claim 14 or 15, wherein the processing unit is specifically configured to:

perform a first time-to-frequency conversion on the first data segment to determine a first spectrogram, wherein the first spectrogram indicates a relationship between an amplitude and a frequency of the first data segment; determine a spectral bandwidth of the first spectrogram based on the first spectrogram; and compare the spectral bandwidth of the first spectrogram with a first spectral bandwidth threshold, and determine the first parameter set as the target parameter set when the spectral bandwidth of the first spectrum is greater than or equal to the first spectral bandwidth threshold, or determine the second parameter set as the target parameter set when the spectral bandwidth of the first spectrum is less than the first spectral bandwidth threshold, wherein the first spectral bandwidth threshold is determined through a pre-experiment.

**17.** The apparatus according to claim 15, wherein the processing unit is further configured to:

determine a third parameter set based on the first parameter set, and determine a fourth parameter set based on the second parameter set, wherein the third parameter set and the fourth parameter set belong to the candidate parameter sets; and

the third parameter set comprises a time of flight $\tau_1$ and the Doppler frequency $f_{d1}$, and the time of flight $\tau_1$ is determined by using the following formula (7):

$$\tau_1 = \frac{f_{b1}}{\alpha} \ (7);$$

and

the fourth parameter set comprises a time of flight $\tau_2$ and the Doppler frequency $f_{d2}$, and the time of flight $\tau_2$ is determined by using the following formula (8):

$$\tau_2 = \frac{f_{b2}}{\alpha} \ (8),$$

wherein $\alpha$ represents a frequency modulation slope of the first local oscillator signal.

**18.** The apparatus according to claim 17, wherein before the processing unit determines the target parameter set based on the first data segment, the processing unit is further configured to:

determine a second local oscillator signal, and determine a third frequency sweep curve based on a signal characteristic of the second local oscillator signal, wherein the second local oscillator signal is a local oscillator signal in a reference channel, and the second local oscillator signal and the first local oscillator signal are from a same light source; and

translate, based on the third parameter set, the third frequency sweep curve in time-frequency domain to obtain a fourth frequency sweep curve, and translate, based on the fourth parameter set, the third frequency sweep curve in time-frequency domain to obtain a fifth frequency sweep curve.

**19.** The apparatus according to claim 18, wherein the processing unit is specifically configured to:

perform a second time-to-frequency conversion on the first data segment to determine a second spectrogram, wherein the second spectrogram indicates a time-varying relationship of a frequency difference between the first frequency sweep curve and the second frequency sweep curve in the first time period;

determine a third spectrogram based on the third frequency sweep curve and the fourth frequency sweep curve, and determine a fourth spectrogram based on the third frequency sweep curve and the fifth frequency sweep curve, wherein the third spectrogram indicates a time-varying relationship of a frequency difference between the third frequency sweep curve and the fourth frequency sweep curve in a second time period, the fourth spectrogram indicates a time-varying relationship of a frequency difference between the third frequency sweep curve and the fifth frequency sweep curve in a third time period, the second time period has an intersection with a time period between an end point of a first linear frequency sweep segment of the third frequency sweep curve and a start point of a second linear frequency sweep segment of the fourth frequency sweep curve, and the third time period has an intersection with a time period between the end point of the first linear frequency sweep segment of the third frequency sweep curve and a start point of a second linear frequency sweep segment of the fifth frequency sweep curve;

compare the second spectrogram with the third spectrogram to determine a first matching degree, and compare the second spectrogram with the fourth spectrogram to determine a second matching degree; and

determine the third parameter set as the target parameter set when the first matching degree is higher, or determine the fourth parameter set as the target parameter set when the second matching degree is higher.

**20.** The apparatus according to claim 19, wherein the second time-to-frequency conversion comprises a short-time Fourier transform or a wavelet transform.

**21.** The apparatus according to claim 18, wherein the processing unit is specifically configured to:

perform a first time-to-frequency conversion on the first data segment to determine a first spectrogram, wherein the first spectrogram indicates a relationship between an amplitude and a frequency of the first data segment; determine a second beat frequency signal based on the third frequency sweep curve and the fourth frequency sweep curve, and determine a third beat frequency signal based on the third frequency sweep curve and the fifth frequency sweep curve;

determine a second data segment and a third data segment, wherein the second data segment is a signal intercepted from the second beat frequency signal in a second time period, the third data segment is a signal intercepted from the third beat frequency signal in a third time period, the second time period has an intersection with a time period between an end point of a first linear frequency sweep segment of the third frequency sweep curve and a start point of a second linear frequency sweep segment of the fourth frequency sweep curve, and the third time period has an intersection with a time period between the end point of the first linear frequency sweep segment of the third frequency sweep curve and a start point of a second linear frequency sweep segment of the fifth frequency sweep curve;

separately perform the first time-to-frequency conversion on the second data segment and the third data segment, to determine a fifth spectrogram and a sixth spectrogram, wherein the fifth spectrogram indicates a relationship between an amplitude and a frequency of the second data segment, and the sixth spectrogram indicates a relationship between an amplitude and a frequency of the third data segment;

perform a cross-correlation operation on the fifth spectrogram and the first spectrogram to determine a seventh spectrogram, and perform a cross-correlation operation on the sixth spectrogram and the first spectrogram to determine an eighth spectrogram;

determine a quantity of first spectrum features of the seventh spectrogram as a first quantity, and determine a quantity of first spectrum features of the eighth spectrogram as a second quantity, wherein the first spectrum feature comprises a maximum value existing in a spectrum, a signal-to-noise ratio of the spectrum being greater than a first threshold, or a spectrum waveform symmetry; and

determine the third parameter set as the target parameter set when the first quantity is greater than the second quantity, or determine the fourth parameter set as the target parameter set when the second quantity is greater than the first quantity; or

determine a first score corresponding to the seventh spectrogram, wherein the first score is obtained by performing weighting calculation on a score corresponding to each of the first spectrum features of the seventh spectrogram; and determine a second score corresponding to the eighth spectrogram, wherein the second score is obtained by performing weighting calculation on a score corresponding to each of the first spectrum features of the eighth spectrogram; and

determine the third parameter set as the target parameter set when the first score is greater than the second score, or determine the fourth parameter set as the target parameter set when the second score is greater than the first score.

22. The apparatus according to claim 16 or 21, wherein the first time-to-frequency conversion comprises a fast Fourier transform.

23. A signal processing apparatus, comprising a processor and a memory, wherein the processor is connected to the memory, the memory is configured to store program code, and the processor is configured to invoke the program code to perform the method according to any one of claims 1 to 11.

24. A chip system, wherein the chip system is used in an electronic device; the chip system comprises one or more interface circuits and one or more processors; the interface circuit and the processor are interconnected through a line; the interface circuit is configured to: receive a signal from a memory of the electronic device, and send the signal to the processor, wherein the signal comprises computer instructions stored in the memory; and when the processor executes the computer instructions, the electronic device performs the method according to any one of claims 1 to 11.

25. A computer-readable storage medium, wherein the computer-readable storage medium stores a computer program, and the computer program is executed by a processor to implement the method according to any one of claims 1 to 11.

26. A computer program product, wherein when computer program code or instructions are executed on a computer, the computer is enabled to perform the method according to any one of claims 1 to 11.

27. A vehicle, comprising the apparatus according to any one of claims 12 to 23.

Vehicle 100

Sensing system 120

Computing platform 150

| Processor 151 | Processor 152 | ... | Processor 15n |

FIG. 1

FIG. 2

Tunable laser

Isolator

Coupler

Coupler

Reference path

Circulator

Optical lens module

$R$

Target object

Balanced photodetector

FIG. 3

Scenario 1: $\tau$=0.5 μs, and $f_d$=20 MHz

Frequency/GHz

———— Local oscillator signal

– – – Echo signal

1.0

0.8

0.6

0.4

0.2

0

0  1  2  3  4  5  6  7  8  9  10  Time/μs

FIG. 4(a)

Scenario 2: $\tau$=0.1 μs, and $f_d$=100 MHz

Frequency/GHz

———— Local oscillator signal

– – – Echo signal

1.0

0.8

0.6

0.4

0.2

0

0  1  2  3  4  5  6  7  8  9  10  Time/μs

FIG. 4(b)

FIG. 4(c)

EP 4 700 437 A1

Frequency

——— Local oscillator signal

- - - - Echo signal

Time

Frequency

Down chirp
frequency

Doppler
frequency

Up chirp
frequency

Time

FIG. 5

Photoelectric
detector

Echo
signal

Local
oscillator
signal

Inphase and
quadrature
optical
mixer

1

2

3

4

$\ominus$

$\ominus$

Signal
orthogonalization

Beat
frequency
signal

FIG. 6

Laser

Laser driver

Transmit waveform design module

Optical splitter

Transmit signal

Local oscillator signal

Measurement channel

Circulator

Echo signal

Optical lens

Scanning module

Target object

3DB coupler

BPD

Amplifier

ADC

Algorithm processing

Reference channel

Reference time of flight

BPD

ADC

Scanning curve estimation

FIG. 7

S810: Determine a first frequency sweep curve, where each frequency modulation periodicity of the first frequency sweep curve includes an up chirp segment and a down chirp segment, the up chirp segment includes a first linear frequency sweep segment and a first preset frequency sweep segment, the down chirp segment includes a second linear frequency sweep segment and a second preset frequency sweep segment, and the first preset frequency sweep segment is connected to the second preset frequency sweep segment

S820: Generate, based on the first frequency sweep curve, a first local oscillator signal and a first transmit signal that have a same waveform

S830: Perform a frequency mixing operation on the first local oscillator signal and the first echo signal, to determine a first beat frequency signal

S840: Determine a first data segment, where the first data segment is a signal intercepted from the first beat frequency signal in a first time period, and the first time period has an intersection with a time period between an end point of the first linear frequency sweep segment of the first frequency sweep curve and a start point of a second linear frequency sweep segment of a second frequency sweep curve corresponding to the first echo signal

S850: Determine a target parameter set based on the first data segment, where the target parameter set is used to resolve a range to a target object and a radial velocity of the target object

FIG. 8

S910: Perform a first time-to-frequency conversion on a first data segment to determine a first spectrogram

S920: Determine a spectral bandwidth of the first spectrogram based on the first spectrogram

S930: Compare the spectral bandwidth of the first spectrogram with a first spectral bandwidth threshold, to determine a first comparison result

S940: Select a target parameter set from a candidate parameter set based on the first comparison result

FIG. 9

FIG. 10

S1110: Determine a third parameter set and a fourth parameter set based on a first parameter set and a second parameter set, where the third parameter set and the fourth parameter set belong to candidate parameter sets

S1120: Determine a second local oscillator signal and a corresponding third frequency sweep curve, where the second local oscillator signal is a reference signal corresponding to a first local oscillator signal

S1130: Translate, based on the third parameter set, the third frequency sweep curve in time-frequency domain to obtain a fourth frequency sweep curve, and translate, based on the fourth parameter set, the third frequency sweep curve in time-frequency domain to obtain a fifth frequency sweep curve

S1140: Perform a second time-to-frequency conversion on a first data segment to determine a second spectrogram

S1150: Determine a third spectrogram based on the third frequency sweep curve and the fourth frequency sweep curve, and determine a fourth spectrogram based on the third frequency sweep curve and the fifth frequency sweep curve

S1160: Compare the second spectrogram with the third spectrogram to determine a first matching degree, and compare the second spectrogram with the fourth spectrogram to determine a second matching degree

S1170: Determine the third parameter set as a target parameter set when the first matching degree is higher, or determine the fourth parameter set as a target parameter set when the second matching degree is higher

FIG. 11

| S1142: Intercept a first data segment |
| --- |

| S1144: Divide a first time domain segment into N sub-segments |
| --- |

| S1146: Perform an STFT operation on each sub-segment |
| --- |

| S1148: Write spectral data that is in a reserved positive frequency part and that corresponds to each sub-segment into a two-dimensional time-frequency spectrum |
| --- |

FIG. 12(a)

FIG. 12(b)

Spectrum obtained after performing a short-time Fourier
transform on a sub-segment

FIG. 12(c)

FIG. 12(d)

Frequency/GHz

Third frequency
sweep curve

Fourth frequency
sweep curve

1.0
0.8
0.6
0.4
0.2
0

0  1  2  3  4  5  6  7  8  9  10  Slot

Intermediate frequency corresponding to each
sub-segment of a first time-domain segment

Frequency/MHz

100

80

60

40

20

0

1  2  3  4  5  6  7  8  9  10  Slot

FIG. 13(a)

Frequency/GHz

1.0
0.8
0.6
0.4
0.2
0

0  10  20  30  40  50  60  70  80  90  100  Slot
(slot)

FIG. 13(b)

FIG. 13(c)

S1410: Perform a first time-to-frequency conversion on a first data segment to determine a first spectrogram

S1420: Determine a second beat frequency signal based on a third frequency sweep curve and a fourth frequency sweep curve, and determine a third beat frequency signal based on the third frequency sweep curve and a fifth frequency sweep curve

S1430: Determine a second data segment and a third data segment, where the second data segment is a signal intercepted from the second beat frequency signal in a second time period, and the third data segment is a signal intercepted from the third beat frequency signal in a third time period

S1440: Separately perform the first time-to-frequency conversion on the second data segment and the third data segment to determine a fifth spectrogram and a sixth spectrogram

S1450: Perform a cross-correlation operation on the fifth spectrogram and the first spectrogram to determine a seventh spectrogram, and perform a cross-correlation operation on the sixth spectrogram and the first spectrogram to determine an eighth spectrogram

S1460: Determine a quantity of first spectrum features of the spectrogram as a first quantity, and determine a quantity of first spectrum features of the eighth spectrogram as a second quantity

S1470: Determine a third parameter set as a target parameter set when the first quantity is greater than the second quantity, or determine a fourth parameter set as a target parameter set when the second quantity is greater than the first quantity

S1480: Determine a first score corresponding to the seventh spectrogram, where the first score is obtained by performing weighting calculation on a score corresponding to each of first spectrum features of the seventh spectrogram; and determine a second score corresponding to the eighth spectrogram, where the second score is obtained by performing weighting calculation on a score corresponding to each of first spectrum features of the eighth spectrogram

S1490: Determine a third parameter set as a target parameter set when the first score is greater than the second score, or determine a fourth parameter set as a target parameter set when the second score is greater than the first score

FIG. 14

Ambiguity in velocity and range resolution

FIG. 15(a)

Ambiguity in velocity and range resolution

FIG. 15(b)

First local oscillator signal to which
a special waveform is added

FIG. 16(a)

Scenario 1

FIG. 16(b)

Scenario 2

FIG. 16(c)

FIG. 17(a)

FIG. 17(b)

Apparatus 1800

Determining unit 1810

Signal generation unit 1820

Processing unit 1830

FIG. 18

1900

Memory 1910

Processor 1920

Bus 1940

Communication interface 1930

FIG. 19

Computer-readable storage medium 2000

Computer instructions 2010

FIG. 20

## INTERNATIONAL SEARCH REPORT

| International application No. |
| --- |
| **PCT/CN2024/086572** |

### A. CLASSIFICATION OF SUBJECT MATTER

G01S17/34(2020.01)i; G01S 17/42(2006.01)i; G01S 17/58(2006.01)i; G01S 7/48(2006.01)i

According to International Patent Classification (IPC) or to both national classification and IPC

### B. FIELDS SEARCHED

Minimum documentation searched (classification system followed by classification symbols)

IPC:G01S

Documentation searched other than minimum documentation to the extent that such documents are included in the fields searched

Electronic data base consulted during the international search (name of data base and, where practicable, search terms used)

CNABS; CNTXT; CNKI; VEN; ENTXT; WEB OF SCIENCE; IEEE: 调频连续波, 上啁啾, 下啁啾, 模糊, 鲁棒性, FMCW, frequency modulated continuous wave, up chirp, down chirp, fuzzy, ambiguity, vagueness, robustness

### C. DOCUMENTS CONSIDERED TO BE RELEVANT

| Category* | Citation of document, with indication, where appropriate, of the relevant passages | Relevant to claim No. |
| --- | --- | --- |
| X | CN 114879215 A (BEIJING MORELITE SEMICONDUCTOR TECHNOLOGY CO., LTD.) 09 August 2022 (2022-08-09) description, paragraphs [0029]-[0034], and figures 2(c) and 3(c) | 1-4, 12-15, 23-27 |
| A | CN 101128988 A (ORTHOTRON CO., LTD.) 20 February 2008 (2008-02-20) entire document | 1-27 |
| A | CN 109521417 A (HARBIN ENGINEERING UNIVERSITY) 26 March 2019 (2019-03-26) entire document | 1-27 |
| A | CN 115166761 A (BEIJING MORELITE SEMICONDUCTOR TECHNOLOGY CO., LTD.) 11 October 2022 (2022-10-11) entire document | 1-27 |
| A | KR 20140064489 A (MANDO CORP.) 28 May 2014 (2014-05-28) entire document | 1-27 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **30 April 2024** | **28 May 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/086572**

| Patent document cited in search report | | | Publication date (day/month/year) | Patent family member(s) | | | Publication date (day/month/year) |
|---|---|---|---|---|---|---|---|
| CN | 114879215 | A | 09 August 2022 | None | | | |
| CN | 101128988 | A | 20 February 2008 | CN | 101128988 | B | 20 April 2011 |
| CN | 109521417 | A | 26 March 2019 | None | | | |
| CN | 115166761 | A | 11 October 2022 | None | | | |
| KR | 20140064489 | A | 28 May 2014 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310460703